# EUROPEAN PATENT SPECIFICATION

(11) **EP 2 605 435 B1**
(45) Date of publication and mention of the grant of the patent: **12.11.2014**
(21) Application number: 10855782.8
(22) Date of filing: 13.08.2010
(51) Int. Cl.: H04L 1/00, H04W 72/04

(54) **METHOD AND DEVICE FOR TRANSMITTING DOWNLINK CONTROL INFORMATION, METHOD AND DEVICE FOR RECEIVING DOWNLINK CONTROL INFORMATION**
VERFAHREN UND VORRICHTUNG ZUR ÜBERTRAGUNG VON DOWLINK-STEUERINFORMATIONEN, VERFAHREN UND VORRICHTUNG FÜR DEN EMPFANG VON DOWLINK-STEUERINFORMATIONEN
PROCÉDÉ ET DISPOSITIF POUR UNE TRANSMISSION D'INFORMATIONS DE CONTRÔLE SUR LA LIAISON DESCENDANTE, PROCÉDÉ ET DISPOSITIF POUR UNE RÉCEPTION D'INFORMATIONS DE CONTRÔLE SUR LA LIAISON DESCENDANTE

(43) Date of publication of application: 19.06.2013
(73) Proprietor: Fujitsu Limited, Kawasaki-shi, Kanagawa 211-8588 (JP)
(72) Inventor: WANG, Yi, Beijing 100025 (CN); ZHOU, Hua, Beijing 100025 (CN); WU, Jianming, Beijing 100025 (CN)
(74) Representative: Wilding, Frances Ward
(86) International application number: PCT/CN2010/075977
(87) International publication number: WO 2012/019361

(56) References cited:
- EP-A1- 2 200 392
- WO-A2-2010/016737
- WO-A2-2010/016737
- AU-A1- 2009 261 058
- CN-A- 101 541 063
- CN-A- 101 594 205
- CN-A- 101 594 205
- ERICSSON: "Introducing missing L1 parameters into 36.213", 3GPP DRAFT; R1-082734 {DRAFT CR36.213 MISSING L1 PARAMETERS}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080706, 6 July 2008 (2008-07-06), XP050110962, [retrieved on 2008-07-06]
- FUJITSU: "Consideration for aperiodic sounding for LTE-Advanced system", 3GPP DRAFT; R1-105680_SRS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 6 October 2010 (2010-10-06), XP050450779, [retrieved on 2010-10-06]
- FUJITSU: "Remaining Issues for Aperiodic Sounding", 3GPP DRAFT; R1-106233, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050489670, [retrieved on 2010-11-09]

## Description

### FIELD OF THE INVENTION

The present invention relates to the field of wireless communication, and more particularly to a method and a device for transmitting and receiving downlink control information (DCI), a terminal, a base station, and a communication system including the terminal and the base station.

### BACKGROUND OF THE INVENTION

In a Long Term Evolution (LTE) system, an uplink channel is measured by using an uplink Sounding Reference Signal (SRS) to perform frequency selection scheduling. Parameter configurations of the SRS signal is notified by a high-layer signaling of the system.

CN101594205A disclosed a Method for transmitting downlink control signaling of LTE-Advanced system, which can reduce the frequency of a UE blind test. EP2200392A1 disclosed a method and apparatus for causing a wireless communication device to release semi-persistent uplink and/or downlink communication resources, wherein a control message on physical downlink control channel (PDCCH) may include DCI in a plurality of DCI fields arranged in a DCI format, and the data from the at least one of the DCI fields is identical to a fixed SPS (semi persistent scheduling) release value. AU2009261058A1 disclosed a method for adjusting a granularity of resource allocation in a wireless mobile communication system supporting a compact scheduling, wherein a resource indication value (RIV) corresponds to a start index of one set of consecutive virtual resource blocks (VRBs) and a length of the VRBs.

### SUMMARY OF THE INVENTION

Brief overview of the invention is given hereinafter so as to provide basic understanding of some aspects of the invention. It should be understood that this overview is not an exhaustive overview of the invention. It is neither intended to define the key or important part of the invention, nor intended to define the scope of the invention. The only purpose is to give some concepts in a simplified form, for serving as a prolusion of the more detailed description discussed later.

To allocate the resource of the SRS more flexibly, it is proposed to use DCI as a signaling for configuring the SRS. To prevent the new DCI from increasing the maximum times of the blind detection, and thus increasing the complexity of the user terminal, it is proposed to make the length of the DCI for SRS resource allocation be the same as that of the existing DCI in the LTE system. In the case that the two different types of DCI have the same length, it is necessary to distinguish them effectively.

Therefore, according to an embodiment of this application, it is proposed to distinguish different functions of the downlink control information by using different ranges of the values of the Resource Indication Value (RIV) in the downlink control information.

According to an embodiment of the invention, a method for transmitting downlink control information (DCI) includes: setting different values to a resource indication value (RIV) in the DCI to be transmitted based on the function of the DCI, wherein different ranges of the values correspond to different functions of the DCI; and transmitting the DCI, wherein a first function of the DCI is to be used as a signaling for configuring an uplink sounding reference signal (SRS), and a second function of the DCI is to be used as a signaling for scheduling a physical uplink shared channel (PUSCH).

According to another embodiment of the invention, a method for receiving downlink control information (DCI) includes: receiving the DCI; acquiring a resource indication value (RIV) in the DCI; and determining the function of the DCI based on values of the RIV, wherein different ranges of the values correspond to different functions of the DCI, wherein a first function of the DCI is to be used as a signaling for configuring an uplink sounding reference signal (SRS), and a second function of the DCI is to be used as a signaling for scheduling a physical uplink shared channel (PUSCH).

According to yet another embodiment of the invention, a device for transmitting downlink control information (DCI), comprising: resource indication value (RIV) setting means for setting different values to the RIV in the DCI to be transmitted based on the function of the DCI, wherein different ranges of the values correspond to different functions of the DCI; and transmitting means for transmitting the DCI, wherein a first function of the DCI is to be used as a signaling for configuring an uplink sounding reference signal (SRS), and a second function of the DCI is to be used as a signaling for scheduling a physical uplink shared channel (PUSCH).

According to yet another embodiment of the invention, a device for receiving downlink control information (DCI), comprising: receiving means for receiving the DCI; resource indication value (RIV) acquiring means for acquiring the RIV in the DCI; and DCI function determining means for determining the function of the DCI based on values of the RIV, wherein the different ranges of the values correspond to different functions of the DCI, wherein a first function of the DCI is to be used as a signaling for configuring an uplink sounding reference signal (SRS), and a second function of the DCI is to be used as a signaling for scheduling a physical uplink shared channel (PUSCH).

With the provided embodiments, it is possible to distinguish different downlink control information with the same length by using the resource indication value in the downlink control information.

### BRIEF DESCRIPTION OF THE DRAWINGS

The above and other objects, features and advantages of the invention will be more easily understood by referring to the description of the embodiment of the invention given in conjunction with the drawings hereinafter. In the drawings, same or corresponding technical features or components will be indicated by same or corresponding reference numbers. The drawings together with the following detailed description are contained in this description and form a part thereof, and are used to further illustrate preferred embodiments of the invention and explain the principles and advantages of the invention. In which:
Fig. 1 is a schematic flow chart of a method for transmitting DCI according to an embodiment of the invention;
Fig. 2 is a schematic flow chart of a method for transmitting DCI according to a preferred embodiment of the invention;
Fig. 3 is a schematic flow chart of a method for transmitting DCI according to a preferred embodiment of the invention;
Fig. 4 is a schematic diagram of a configuration of DCI for Physical Uplink Shared Channel (PUSCH) scheduling and DCI for configuring the SRS;
Fig. 5 is a schematic diagram of usage of RIV in DCI under several typical bandwidth configurations;
Fig. 6 is a schematic diagram of RIV in DCI provided according to an embodiment of the invention;
Fig. 7 is a schematic diagram of a format of DCI according to an embodiment of the invention;
Fig. 8 is a schematic diagram of a format of DCI according to a preferred embodiment of the invention;
Fig. 9 is a schematic diagram of a DCI format according to a preferred embodiment of the invention;
Fig. 10 is a schematic flow chart of a method for receiving DCI according to an embodiment of the invention;
Fig. 11 is a schematic flow chart of a method for receiving DCI according to a preferred embodiment of the invention;
Fig. 12 is a schematic flow chart of a method for receiving DCI according to a preferred embodiment of the invention;
Fig. 13 is a schematic flow chart of a method for receiving DCI according to a preferred embodiment of the invention;
Fig. 14 is a schematic flow chart of a method for receiving DCI according to a preferred embodiment of the invention;
Fig. 15 is a schematic flow chart of a method for receiving DCI according to a preferred embodiment of the invention;
Fig. 16 is a block diagram of a device for transmitting DCI according to an embodiment of the invention;
Fig. 17 is a block diagram of a device for transmitting DCI according to a preferred embodiment of the invention;
Fig. 18 is a block diagram of a device for transmitting DCI according to a preferred embodiment of the invention;
Fig. 19 is a block diagram of a device for receiving DCI according to an embodiment of the invention;
Fig. 20 is a block diagram of a device for receiving DCI according to a preferred embodiment of the invention;
Fig. 21 is a block diagram of a device for receiving DCI according to a preferred embodiment of the invention;
Fig. 22 is an exemplary structural block diagram of a general-purpose personal computer in which a method and/or device according to an embodiment of the invention can be implemented; and
Fig. 23 is a schematic diagram of a communication system according to an embodiment of the invention.

### DETAILED DESCRIPTION OF THE INVENTION

Exemplary embodiments of the invention will be described in connection with the drawings hereinafter. For clarity and conciseness, not all the features of the practical embodiments are described in the description. However, it is to be understood that many decisions specific to the embodiment must be made during the development of any of such practical embodiments, so as to achieve a particular object of a developer, for example, restrictive conditions related to system and service must be complied with, and these restrictive conditions may vary with different embodiments. Further, it is also to be understood that although the developing work may be very complicated and time-consuming, such developing work is only a routine task for those skilled benefit from this disclosure.

Here, it is to be noted that only the device structures and/or processing steps closely related to the scheme of the invention are shown in the drawings, and other details that have little to do with the invention are omitted, so as to avoid the invention being blurred due to the unnecessary details.

### DCI transmitting method

### First embodiment

As mentioned above, it is proposed to use DCI as a signal for configuring a SRS, so as to allocate the resource of the SRS more flexibly. To prevent the new DCI from increasing the maximum times of the blind detection and thus increasing the complexity of the user terminal, it is proposed that the length of the DCI for SRS resource allocation should be the same as that of the existing DCI in the LTE system. In the case that the two different types of DCI have the same length, it is necessary to distinguish them effectively.

Further, it can be seen that except for being used for configuring the SRS and the existing usage in the LTE system, the DCI may have other usages, and based on the same reasons as mentioned above, it is also desired that various DCI have the same length. Thus, it is necessary to distinguish various DCI having the same length.

It is observed by the applicant that in the existing DCI, such as the DCI for scheduling the PUSCH (referred to as DCI 0 hereinafter), not all the values of the RIV are used. Thus, according to an embodiment of this application, to be distinguished from the existing DCI 0, it is proposed to distinguish different functions of the DCI by using different ranges of the values of the RIV in the DCI. Thus, a completely novel DCI is provided according to this embodiment, the function of the DCI can be indicated by using the RIV value, including being used as an existing signaling for scheduling the PUSCH (DCI 0) and other usages.

Hereinafter, the description is given by using DCI for configuring the SRS and scheduling the PUSCH as example, which is not meant to restrict the invention.

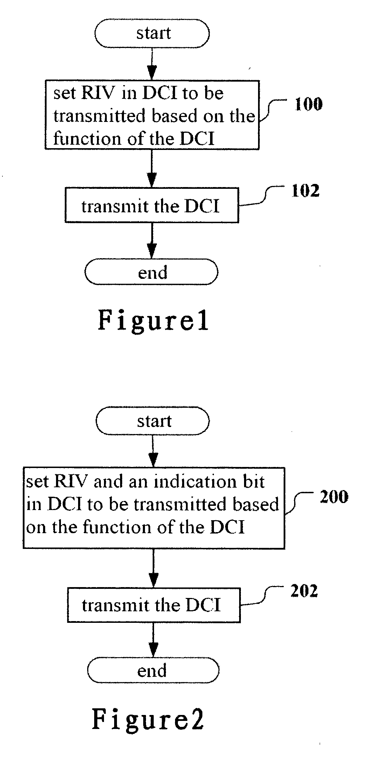

Fig. 1 is a schematic flow chart of a method for transmitting DCI according to an embodiment of the invention. In Fig. 1, at step 100, different values can be set to RIV in DCI to be transmitted based on the function of the DCI, and different ranges of values correspond to different functions. As a preferred embodiment, the function of the DCI can include the function of being used as a signaling for configuring SRS and the function of being used as a signaling for scheduling a PUSCH, as well as other functions. Preferably, a first range of values of the RIV can be used to indicate the signaling for configuring an uplink sounding reference signal (SRS), and a second range of values of the RIV can be used to indicate the signaling for scheduling a physical uplink shared channel (PUSCH). At step 102, the DCI configured as above is transmitted.

In the following, the instances for setting a value to the RIV in the DCI are described by taking the application in the LTE system as an example. It should be understood that these instances are only examples, but not meant to limit this application, and can be varied according to the particular application scene in a particular implementation.

In the LTE system, the RIV information contained in the DCI 0 for indicating the PUSCH information is used to indicate the physical time/frequency resource information that is allocated by a base-station (eNB) for PUSCH of each user. In different system bandwidth configurations, the bit lengths of the RIV information are different. For example, in the case that the system bandwidth is 5 MHz, the length of the RIV information is 9 bits; and in the case that the system bandwidth is 10 MHz, the length of the RIV information is 11 bits. However, the information contents of the physical time/frequency resource information do not need use all the values of all the bits of the RIV For example, in the case that the system bandwidth is 5 MHz, the length of the RIV information is 9 bits, which is able to indicate 512 resource allocation combinations, but the physical time/frequency resource information uses only the first 325 combinations actually, leaving 187 combinations unused. Therefore, the RIV of the DCI 0 for indicating the PUSCH scheduling information has no combination with value in the range of 325~511. Thus, according to an embodiment of the invention, the ranges of the values of the first 325 combinations can be used to indicate the DCI for scheduling the PUSCH, and the range of 325~511 can be used to indicate other functions, for example, the entire range of 325~511 are used to indicate that this DCI is a signaling for configuring the SRS.

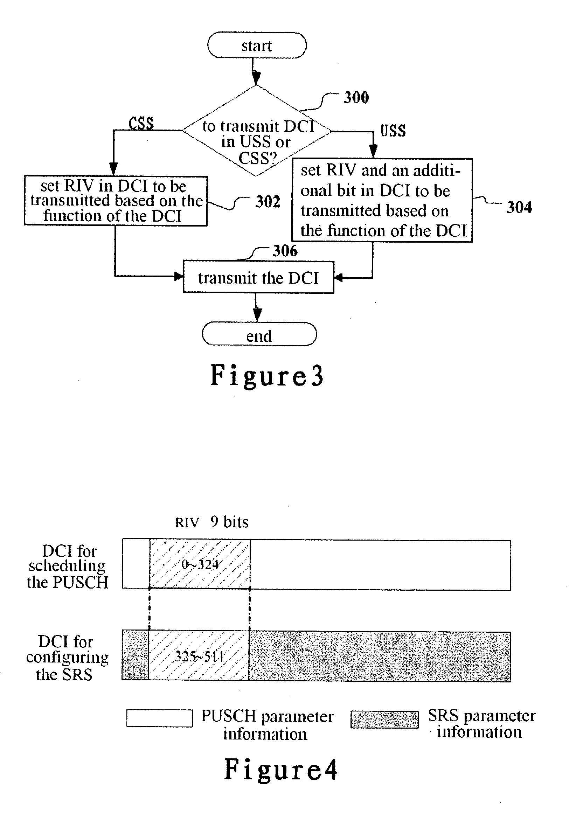

Specifically, as shown in Fig. 4, Fig. 4 is a schematic diagram of a configuration of DCI for scheduling the PUSCH and DCI for configuring the SRS. In Fig. 4, an example of the allocation of the RIV in the DCI in the case that the system bandwidth is 5 MHz is shown. The first 325 combinations of the 9 bits of RIV information in the DCI, i.e., 0-324, are used to indicate that the DCI is used for scheduling the PUSCH, and the last 187 combinations, i.e., 325-511, are used to indicate that the DCI is used for configuring the SRS.

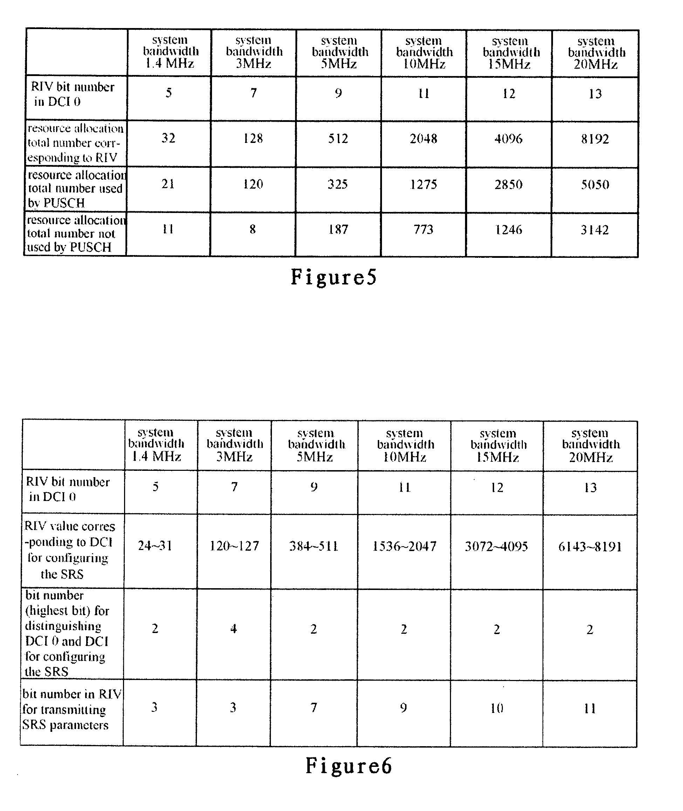

The above case in which the system bandwidth is 5 MHz is only an example. The system can have various bandwidths in practice. Fig. 5 is a schematic diagram of usage of RIV in DCI in several typical bandwidth configurations. As shown in Fig. 5, in the case that the system bandwidth is 10 MHz, in the DCI, the length of the RIV is 11 bits, and the physical resource allocation total number corresponding to RIV is 2¹¹=2048, which indicates 2048 resource allocation combinations. In practice, only 1275 resource allocation combinations are used in the PUSCH, that is to say, other 773 combinations are not used. Other system bandwidths are also shown in Fig. 5, which will not be described in detail herein.

Corresponding to the data shown in Fig. 5, Fig. 6 is a schematic diagram of RIV in DCI provided according to an embodiment of the invention. In Fig. 6, the manners for configuring RIV under various cases of system bandwidths are shown. Also taking the system bandwidth of 5 MHz as an example, in the DCI, the length of the RIV is 9 bits, the RIV value range corresponding to DCI for configuring the SRS is 384-511. In this case, the two highest bits in the RIV corresponding to the DCI for scheduling the PUSCH can not be both 1 simultaneously, and only the two highest bits in the RIV corresponding to the DCI for configuring the SRS are both 1. Thus, the two highest bits of the 9 bits of the RIV can be used to distinguish the DCI 0 from the DCI for configuring the SRS. Thus, when the DCI is used for configuring the SRS, the other 7 bits can be used to transmit a part of the SRS parameter information. That is to say, similar to the RIV in the DCI used as the signaling for scheduling the PUSCH, the range of the value indicates the function of the DCI, and the specific values thereof transmit other useful parameters.

Similarly, as shown in Fig. 6, in the case that the system bandwidth is 1.4 MHz, whether the two highest bits of the 5 bits being both 1 can be used to distinguish the DCI used as the signaling for scheduling the PUSCH from the DCI used as the signaling for configuring the SRS. In the case that the system bandwidth is 3 MHz, the 4 highest bits of the 7 bits are used; and in the case that the system bandwidth is 10 MHz, 15 MHz, and 20 MHz, the 2 highest bits are used.

Thus, with such signaling design method, the user can effectively distinguish the DCI for configuring the SRS from the DCI for scheduling the PUSCH having the same length, without increasing the blind detection times of the physical downlink control channel (PDCCH), thereby avoiding the increase in the complexity of the mobile station and the increase in possibility of false alarm.

It is to be noted that the method for distinguishing different functions of the DCI according to whether the several highest effective bits all being 1 is only one of the manners, but not meant to limit the invention. For example, it is also possible to distinguish different functions of the DCI according to whether the predetermined numbers of bits in the RIV complying with the predetermined pattern. For example, the value distribution of the RIV for configuring the SRS and scheduling the PUSCH can be redesigned, so that the predetermined pattern of the several highest effective bits can be used as the criterion, or the predetermined pattern of the several lowest effective bits can be used as the criterion. Alternatively, when the DCI is used to achieve 3 or more functions, more bits of distribution patterns may need to be used to distinguish. Further, the bits other than the bits for determining the predetermine pattern can also be used to transmit a part of the SRS parameter information. In other words, the distinguishing using several bits of predetermined distribution patterns (including the pattern of all 1) is only a relatively concise manner for determining the range of the value of the RIV, in which it is still a determination of the range of the value of the RIV essentially. The range of the value indicates the function of the DCI, and the specific values are used to transmit other useful parameters. Meanwhile, the range of the values of the RIV that is used to distinguish different functions of the DCI may not be a continuous range of the value, but may be a set of discrete values or a combination of multiple small ranges of the values.

Thus, with the above method, different DCI can be distinguished by only a part of the bits of the RIV, so that the signaling overhead is saved, the flexibility is enhanced, and the transmission quality of the signaling is improved.

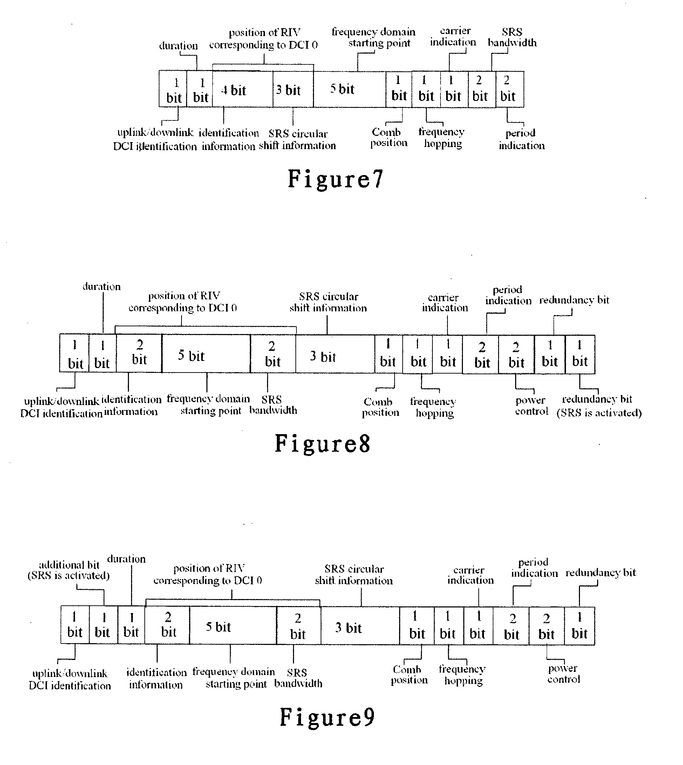

Fig. 7 is a specific instance of a format of DCI for configuring the SRS. As shown in Fig. 7, the DCI for configuring the SRS has the same length as that of the DCI 0, and has the format of DCI in the case that the system bandwidth is 3 MHz. As shown in Fig. 7, RIV occupies 7 bits of sources. At the bit position of the RIV corresponding to DCI 0, the first 4 bits indicate the identification information. If the first 4 bits are all 1, i.e., corresponding to the first ranges of values of the RIV, it is indicated that this DCI is the DCI for configuring the SRS. If not all the first 4 bits are 1, i.e., corresponding to the second ranges of values of the RIV, it is indicated that this DCI is the DCI 0 for scheduling the PUSCH. Fig. 7 shown the case in which all the first 4 bits are set to be 1, to indicate that this DCI is the DCI for configuring the SRS. The last 3 bits in the RIV bit position can be redefined as partial parameter information of the SRS configuration, for example, 3 bits can indicate SRS circular shift information. The first bit in this DCI still remains the same as that is defined in the DCI 0 of the LTE system, for distinguishing DCI 1A and DCI 0. If this bit is set to be 0, it is the same as the DCI 0. If this bit is set to be 1, it indicates the DCI 1A. Other positions in the format of the DCI for configuring the SRS are redefined for transmitting the SRS parameter information. For example, 5 bits are used to indicate the frequency domain starting point for SRS transmission, 1 bit is used to indicate the transmission comb position, 1 bit is used to indicate frequency hopping, 1 bit is used for carrier indication, 2 bits are used to indicate the SRS bandwidth, and 2 bits are used for period indication.

It should be noted that by way of example, 4 highest bits of the RIV are used to distinguish the functions of the DCI here, and other bits are set as to be used to achieve specific functions. However, the invention is not limited thereto. According to the specific system bandwidth and configuration requirement, those skilled in the art can use the predetermined pattern of other suitable bits in the RIV to distinguish the functions of the DCI, and set other bits in the DCI as to be used to transmit related parameter information as mentioned above.

### Second embodiment

In the first embodiment according to the invention, the proposed DCI has the same length as that of the DCI 0. That is to say, when the DCI is used for scheduling the PUSCH, the DCI is the existing DCI 0; and when the DCI is used for configuring the SRS, the DCI has the same length as that of the existing DCI 0 for scheduling the PUSCH. Here, as a preferred embodiment, the redundancy bits in the DCI can be used to indicate the activation state of the SRS.

Specifically, Fig. 2 is a schematic flow chart of a method for transmitting DCI according to a preferred embodiment of the invention. In Fig. 2, at step 200, in addition to the operation in the first embodiment is performed, it can be further included that one bit other than the RIV in the DCI (which bit is a redundancy bit in the DCI) is set as an indication bit based on the function of the DCI to be transmitted. This indication bit together with the RIV indicates the function of the DCI. At step 202, the DCI configured as above is transmitted. It is to be noted that Fig. 2 shown a single step 200, but it is apparent that this step 200 can be divided into two steps in series or in parallel, for respectively setting the RIV and the indication bit, which will not influence its substance.

Preferably, the RIV being within a first range of values and the indication bit being activated can indicate that the DCI is used as the signaling for configuring the SRS; the RIV being within a second range of values and the indication bit being activated can indicate that the DCI is used as the signaling for scheduling the PUSCH and the SRS is activated; and the RIV being within the second range of values and the indication bit being not activated can indicate that the DCI is only used as the signaling for scheduling the PUSCH.

As another embodiment, the RIV being within a first range of values can indicate that the DCI is used as the signaling for configuring the SRS; the RIV being within a second range of values and the indication bit being activated can indicate that the DCI is used as the signaling for scheduling the PUSCH and the SRS is activated; and the RIV being within the second range of values and the indication bit being not activated can indicate that the DCI is only used as the signaling for scheduling the PUSCH. The present embodiment is distinguished from the previous embodiment in that when the DCI is used as the signaling for configuring the SRS, the value of the indication bit is not concerned, because it can be considered that the fact that the DCI is used as the signaling for configuring the SRS can mean that the SRS is to be activated. The problem of whether to use the indication bit to indicate the activation state of the SRS exists only when the DCI is used as the signaling for scheduling the PUSCH.

Fig. 8 is a schematic diagram of an instance of a format of DCI according to a preferred embodiment of the invention. As shown in Fig. 8, the DCI for configuring the SRS has the same length as that of the DCI 0, and the example of the configuration of the DCI in the case that the system bandwidth is 5 MHz is shown (which is different from that shown in Fig. 7 in the case that the system bandwidth is 3 MHz, thus the DCI shown in Figs. 7 and 8 have different lengths). As shown in Fig. 6, in the case that the system bandwidth is 5 MHz, 9 bits in the DCI is used for configuring RIV, 2 bits of which are used to distinguish the DCI 0 from the DCI for configuring the SRS, and the other 7 bits are used to transmit the SRS parameters. Continue to refer to Fig. 8, on the bit position of the RIV corresponding to DCI 0, and the first 2 bits are used as the indication information. Where the bits being all 1 indicates that this DCI is the DCI used for configuring the SRS, otherwise, this DCI is the DCI for scheduling the PUSCH, that is, DCI 0. When the DCI is used for configuring the SRS, the last 7 bits in the RIV bit position are redefined as partial parameter information of the SRS configuration, for example, as shown in the Figure, 5 bits indicate the frequency domain starting point for SRS transmission, and 2 bits indicate SRS bandwidth. The first bit of this DCI is used to distinguish the DCI 1A from the DCI 0. If this bit is set to be 0, this DCI is the same as the DCI 0; and if this bit is set to be 1, it indicates the DCI 1A.

The one redundancy bit corresponding to the SRS activation bit in the DCI 0 (the last bit in Fig. 8) can still be used to indicate the activation of the SRS. Other positions in the format of the DCI for configuring the SRS are all redefined for transmitting SRS parameter information. For example, 2 bits are used for period indication, 2 bits are used to indicate the power control, and 1 bit is reserved as redundancy bit.

As describe above, if the one redundancy bit for SRS activation is in the activate state of the SRS, and the 2 highest bits of the RIV are both 1, this DCI is the DCI for configuring the SRS. If the one redundancy bit for SRS activation is in the activate state of the SRS, and not both the 2 highest bits of the RIV are 1, this DCI is the DCI 0 used as the signaling for scheduling the PUSCH, in which the SRS activation is contained. If the one redundancy bit for SRS activation is in the non-activate state of the SRS, and not both the 2 highest bits of the RIV are 1, this DCI is the DCI 0 used for scheduling the PUSCH. As another embodiment, when the 2 highest bits of the RIV are both 1, this DCI can be used as the DCI for configuring SRS, no matter whether the one redundancy bit is in the activate state of the SRS. At this time, this one redundancy bit can be used to carrier other information.

It is to be noted that as an example, the redundancy bit shown in Fig. 8 is adopted here as the sign of the activation state of the SRS. The invention is not limited thereto, and those skilled in the art can adopt the redundancy bit on other position in the DCI as the sign of the activation state of the SRS.

### Third embodiment

In the first and second embodiments of the invention described above, the described DCI has the same length as that of the existing DCI 0 for indicating the PUSCH scheduling.

However, in an LTE-Advanced (LTE-A) system, the length of the DCI 0 can be changed in an UE-Specific Searching Space (USS), that is, the DCI0' under the single port transmission mode, so as to achieve the enhanced technique of the LTE-A system, for example, 1 bit is added to trigger the SRS transmission and schedule the PUSCH. Thus, if in the USS, the DCI in the first and second embodiment has the length different from that of the DCI 0', so that the blind detection time similar to that described above is increased.

Thus, in this embodiment, it is proposed to use different lengths of DCI according to whether the DCI being to be transmitted in a common searching space (CSS) or an USS. Specifically, when the DCI is to be transmitted in the USS, an additional bit is added into the DCI, so that the DCI has the same length as that of the above DCI 0', thus the blind detection time is decreased.

This additional bit can be a redundancy bit, which is only used to increase the length of the DCI; or this additional bit can be used to carrier other information; or this additional bit can act as the indication bit mentioned in the second embodiment, for indicating the activation state of the SRS, or in other words, together with the RIV, distinguishing the DCI for scheduling the PUSCH (equivalent to DCI 0') and the DCI for configuring the SRS.

In the following, the method for transmitting DCI based on this DCI configuration will be described referring to Fig. 3. Fig. 3 is a schematic flow chart of a method for transmitting DCI according to a preferred embodiment of the invention. In Fig. 3, at step 300, it is determined whether the DCI is to be transmitted in CSS or in USS. If the DCI is to be transmitted in CSS, the RIV in the DCI to be transmitted can be set based on the function of the DCI in step 302. Otherwise, if the DCI is to be transmitted in USS, an additional bit is added into the DCI setting as compared with in the CSS, as shown in step 304. Next, at step 306, the DCI configured as above is transmitted. Here, the added additional bit can be only for increasing the length of the DCI, without concerning the specific value thereof. This bit can carrier information of specific functions, and can also be used as a redundancy bit.

Preferably, when the DCI is to be transmitted in the USS, a value can be set to the additional bit based on the function of the DCI to be transmitted, and this additional bit together with the RIV indicates the function of the DCI.

Preferably, the RIV being within a first range of values and the additional bit being activated can indicate that the DCI is used as the signaling for configuring the SRS; the RIV being within a second range of values and the additional bit being activated can indicate that the DCI is used as the signaling for scheduling the PUSCH and the SRS is activated; and the RIV being within the second range of values and the additional bit being not activated can indicate that the DCI is only used as the signaling for scheduling the PUSCH.

As another embodiment, the RIV being within a first range of values can indicate that the DCI is used as the signaling for configuring the SRS; the RIV being within a second range of values and the additional bit being activated can indicate that the DCI is used as the signaling for scheduling the PUSCH and the SRS is activated; and the RIV being within the second range of values and the additional bit being not activated can indicate that the DCI is only used as the signaling for scheduling the PUSCH. The present embodiment is distinguished from the previous embodiment in that when the DCI is used as the signaling for configuring the SRS, the value of the indication bit is not concerned, because it is considered that the fact that the DCI is used as the signaling for configuring the SRS can mean that the SRS is to be activated. At this time, this additional bit can be used to carrier other information. The problem of whether to use the indication bit to indicate the activation state of the SRS exists only when the DCI is used as the signaling for scheduling the PUSCH.

Fig. 9 is a schematic diagram of an instance of a format of DCI according to a preferred embodiment of the invention. In Fig. 9, the DCI for configuring the SRS has the same length as that of the DCI 0'. Fig. 9 shows the configuration of the DCI in the case that the system bandwidth is 5 MHz. Same as that described in the second embodiment, on the 9-bit position of the RIV corresponding to DCI 0, the first 2 bits are used as the indication information. Where the bits being both set as 1 indicates that this DCI is the DCI used for configuring the SRS, otherwise, this DCI is the DCI for scheduling the PUSCH, that is, DCI 0'. When the DCI is used for configuring the SRS, the last 7 bits in the RIV bit position are redefined as partial parameter information of the SRS configuration, for example, as shown in the Figure, 5 bits indicate the frequency domain starting point for SRS transmission, and 2 bits indicate SRS bandwidth. The first bit of this DCI is used to distinguish the DCI 1A from the DCI 0'. If this bit is set to be 0, this DCI is the same as the DCI 0'; and if this bit is set to be 1, it indicates the DCI 1A.

The one redundancy bit corresponding to the SRS activation bit in the DCI 0' can still be used to indicate the activation state of the SRS (of course, a bit on other position can also be used as the indication bit). Other positions in the format of the DCI for configuring the SRS are all redefined, for transmitting SRS parameter information. For example, 1 bit indicates the duration, 3 bits indicate the SRS circular shift information, 2 bits are used for period indication, 2 bits are used to indicate the power control, and 1 bit is reserved as redundancy bit. Other settings are the same as those in the second embodiment, which will not be described in detail here.

As describe above, if the one additional bit for SRS activation is in the activate state of the SRS, and the 2 highest bits of the RIV are both 1, this DCI is the DCI for configuring the SRS. If the one additional bit for SRS activation is in the activate state of the SRS, and not both the 2 highest bits of the RIV are 1, this DCI is the DCI 0' used as the signaling for scheduling the PUSCH, in which the SRS activation is contained. If the one additional bit for SRS activation is in the non-activate state of the SRS, and not both the 2 highest bits of the RIV are 1, this DCI is the DCI 0' used for scheduling the PUSCH. As another embodiment, when the 2 highest bits of the RIV are both 1, this DCI can be used as the DCI for configuring SRS, no matter whether the one additional bit is in the activate state of the SRS. At this time, this one additional bit can be used to carrier other information.

### Application scene of the DCI transmitting method

For the above first and second embodiments, the DCI has the same length as that of the existing DCI 0, no matter whether the indication bit is used or not, therefore, if the existing system uses the redundancy bit in the DCI 0 to trigger SRS, the DCI provided in this application can be an update of the existing system, and the DCI with the same length are used, no matter the DCI is to be transmitted in the CSS or in the USS.

And if the existing system adopts DCI 0 as the signaling for scheduling the PUSCH, and adopts DCI0' to trigger SRS (meanwhile serving as the signaling for scheduling the PUSCH), then as an update of the existing system, the above third embodiment should be used, that is, the DCI is set to have different lengths according to whether the DCI being to be transmitted in the CSS or in the USS. In this case, as to whether to use USS or to use CSS, the following factors can be considered:
<1> When the eNB considers that the UE needs to transmit SRS but not need to transmit PUSCH, the eNB will not transmit DCI 0 or DCI 0', but only transmit the DCI for configuring the SRS. There are two situations:
   a) if there is space in the CSS, the eNB can transmit the DCI for configuring the SRS (this DCI has the same length as that of the DCI 0) in the CSS, at this time, the one additional bit for triggering SRS in the DCI 0' is not included; the eNB can also transmit this DCI (which has the same length as that of the DCI 0', that is, the additional bit is included in this DCI) in the USS.
   b) if there is no space in the CSS, the eNB can transmit this DCI (which has the same length as that of the DCI 0') only in the USS. At this time, in the DCI for configuring the SRS, the one additional bit for triggering SRS in the DCI 0' is included. According to the different variations in the third embodiment, it can be required that this additional bit must be in the activate state, and can also be not specially considered, only for increasing the length of the DCI. And the one bit of uplink/downlink DCI identification can be included or not included.
<2> When the eNB considers that the UE needs to transmit the SRS and it is also necessary to transmit the PUSCH, the eNB can transmit the DCI 0' only in the USS; and the DCI for configuring the SRS is to be transmitted in the CSS, which has the same length as that of the DCI 0.
<3> When the eNB considers that the UE does not need to transmit the SRS but only needs to transmit the PUSCH, the eNB can transmit the DCI 0 or the DCI 0' (the one bit indicating the activation state is set to be 0, which indicates that the SRS is not to be activated). There are two situations:
   a) if there is space in the CSS, the eNB can transmit the DCI 0 in the CSS, and can also transmit the DCI 0' in the USS;
   b) if there is no space in the CSS, the eNB can only transmit the DCI 0' in the USS. In both cases, eNB will not transmit the DCI for configuring the SRS.

### DCI receiving method

### Fourth embodiment

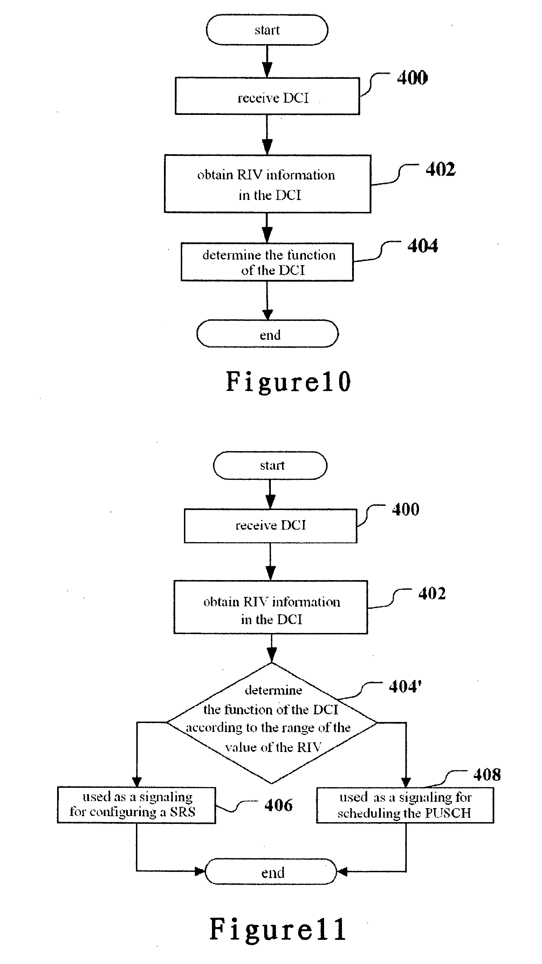

Corresponding to the first embodiment described above, a method for receiving DCI is further provided. Fig. 10 is a schematic flow chart of a method for receiving DCI according to an embodiment of the invention. In Fig. 10, various steps of the method for receiving DCI are shown. At step 400, the DCI is received. At step 402, the RIV in the DCI is obtained. Next, at step 404, the function of the DCI is determined according to the value of the RIV. Wherein, different ranges of the values correspond to different functions of the DCI.

Preferably, as shown in Fig. 11, steps 400 to 402 are the same as those described above. Further, in this preferred embodiment, the function of the DCI is determined based on the ranges of the values of the RIV, as shown at step 404'. Specifically, if the RIV is within the first range of values, it can be determined that this DCI is used as the signaling for configuring the SRS, as shown at step 406; and if the RIV is within the second range of values, it can be determined that this DCI is used as the signaling for scheduling the PUSCH, as shown at step 408.

Preferably, determining the function of the DCI can further include: determining the function of this DCI based on whether predetermined bits of the RIV complying with a predetermined distribution pattern. More preferably, the function of this DCI can be determined according to whether the predetermined consecutive bits of the RIV being all 1. As to the description of the predetermined distribution pattern and the predetermined consecutive bits being all 1, reference can be made to the description of the first embodiment.

Taking the DCI configuration shown in Fig. 7 as an example, in this case, the DCI for configuring the SRS has the same length as that of the DCI 0 in the LTE system. If the 4 highest bits of the RIV are all 1 (as mentioned above, and can also have other distribution patterns), that is, corresponding to the first range of values of the RIV, it indicates that this DCI is the DCI for configuring the SRS. If the 4 highest bits of the RIV are not all 1, that is, corresponding to the second range of values of the RIV, this DCI is the DCI 0 for scheduling the PUSCH.

After the function of the DCI is determined, the parameter information corresponding to this function can be extracted from the DCI according to this function.

### Fifth embodiment

In the fourth embodiment, the received DCI has the same length as that of the DCI 0, and the function of the DCI is determined directly by detecting the RIV in the DCI. Correspondingly, if the redundancy bit in the DCI is used to indicate the activation state of the SRS during the transmission (the second embodiment describe above), it is necessary to further detect this redundancy bit after the DCI is received.

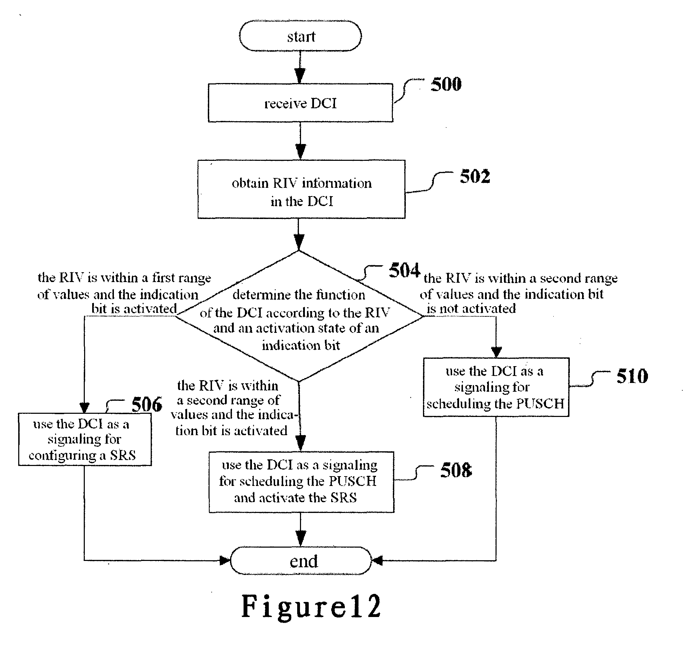

Fig. 12 is a schematic flow chart of a method for receiving DCI according to a preferred embodiment of the invention. At step 500, the DCI is received. Subsequently, at step 502, the RIV information in the DCI is obtained. The difference from the fourth embodiment is that the method for receiving DCI according to the fifth embodiment can further includes: detecting the activation state of an indication bit other than the RIV in the DCI, and determining the function of the DCI according to the value of the RIV and the activation state of the indication bit, as shown at step 504. If the RIV is within the first range of values and the indication bit is in the activate state, it can be determined that this DCI is used as the signaling for configuring the SRS, as shown at step 506. If the RIV is within the second range of values and the indication bit is activated, it can be determined that this DCI is used as the signaling for scheduling the PUSCH and the SRS is activated, as shown at step 508. If the RIV is within the second range of values and the indication bit is not activated, it can be determined that this DCI is only used as the signaling for scheduling the PUSCH.

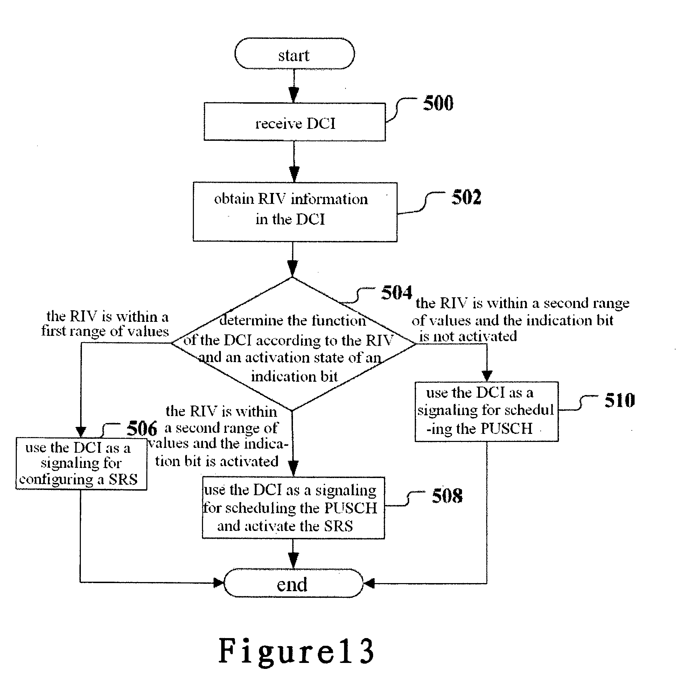

Preferably, as a substitute embodiment of the fifth embodiment described above, the function of the DCI can also be determined according to the RIV and the state of the indication bit as shown in Fig. 13. In Fig. 13, the steps are mostly the same as those in the fifth embodiment, and the difference is the first determination result at the step 504. Specifically, if the RIV is within the first range of values, it can be determined that the DCI is used as the signaling for configuring the SRS, as shown at step 506; if the RIV is within the second range of values and the indication bit is activated, it can be determined that the DCI is used as the signaling for scheduling the PUSCH and the SRS is activated; and if the RIV is within the second range of values and the indication bit is not activated, it can be determined that the DCI is only used as the signaling for scheduling the PUSCH.

The difference between the substitute embodiment and the fifth embodiment lies in that when the DCI is used as the signaling for configuring the SRS, the value of the indication bit is not concerned, because it can be considered that the fact that the DCI is used as the signaling for configuring the SRS can mean that the SRS is to be activated. The problem of whether to use the indication bit to indicate whether the activation state of the SRS exists only when the DCI is used as the signaling for scheduling the PUSCH. Therefore, only when the DCI is received, it is necessary to further determine the activation state of the indication bit and determine the specific function of the DCI in connection with the RIV if the RIV is within the second range of values.

In the above fifth and its substitute embodiments, the range of the value of the RIV and (if necessary) the activation state of the indication bit are both determined at step 504. Of course, this step can also be divided into two steps, the range of the value of the RIV is determined at first, whether to detect the indication bit is determined according to the range of the value of the RIV, and the indication bit is detected if necessary, so as to determine the function of the DCI. Alternatively, the function of the indication bit can be detected first, and then the range of the value of the RIV is determined; or the both can be detected simultaneously in two operations in parallel. These different manners are different only in form, and are essentially the same as the steps shown in Figs. 12 and 13.

As an example, the redundancy bit in the DCI is used as the sign for detecting the activation state of the SRS, as shown in Fig. 8. Fig. 8 shows the configuration of the DCI in the case that the system bandwidth is 5 MHz. Preferably, when the DCI is received, if the one redundancy bit for activating the SRS is in the activate state of the SRS, and the 2 highest bits of the RIV are both 1, this DCI is the DCI for configuring the SRS. If the one redundancy bit for activating the SRS is in the activate state of the SRS, and the 2 highest bits of the RIV are not both 1, this DCI is the DCI 0 for scheduling the PUSCH. If the one redundancy bit for activating the SRS is in the non-activate state of the SRS, and the 2 highest bits of the RIV are not both 1, this DCI is the DCI 0 for scheduling the PUSCH.

It is to be noted that as an example, corresponding to the transmission of the DCI, the 2 highest bit of the RIV is used to distinguish the functions of the DCI, but the invention is not limited thereto. Those skilled in the art can also set by using other suitable bits in the RIV according to the specific system bandwidth and configuration requirement. For example, when the DCI is transmitted, if the bits other than the 2 highest bits (for example, in the case that the system bandwidth is 5 MHz) in the RIV are used to configure, then correspondingly, when the DCI is received, corresponding adjustment needs to be made to detect the function of the DCI. Similarly, as shown in Fig. 8, in the method for transmitting DCI according to the second embodiment of the invention, if other redundancy bit in the DCI is adopted as the sign of the activation state of the SRS, it is necessary to change correspondingly the detection position of this indication bit in the fifth embodiment described above, so as to detect the function of the DCI.

After the function of the DCI is determined, the parameter information corresponding to this function can be extracted from the DCI according to this function.

### Sixth embodiment

If the DCI is transmitted according to the third embodiment, that is, one additional bit SRS is introduced, then it is necessary to add a step for detecting this additional bit when the DCI is received.

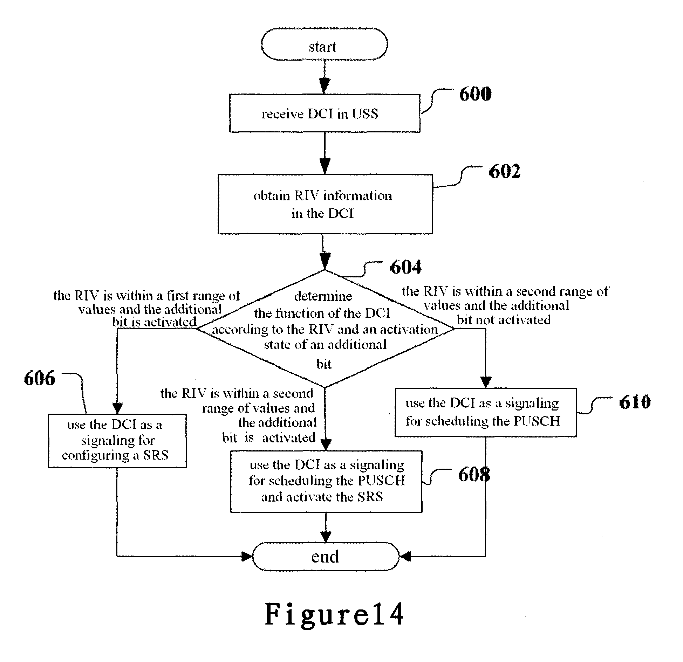

Fig. 14 is a schematic flow chart of a method for receiving DCI according to a preferred embodiment of the invention. In Fig. 12, at step 600, the DCI is received in the USS. Subsequently, at step 602, similar to fifth embodiment, the RIV information of DCI is obtained. Further, it can be further detected whether the additional bit in the DCI is activated, and the function of the DCI is determined according to the value of the RIV and the activation state of the additional bit, as shown at step 604. If this RIV is within the first range of values and the additional bit is activated, it can be determined at step 606 that this DCI is used as the signaling for configuring the SRS. If the RIV is within the second range of values and the additional bit is activated, it can be determined that this DCI is used as the signaling for scheduling the PUSCH and the SRS is activated, as shown at step 608. If the RIV is within the second range of values and the additional bit is not activated, it can be determined that this DCI is only used as the signaling for scheduling the PUSCH.

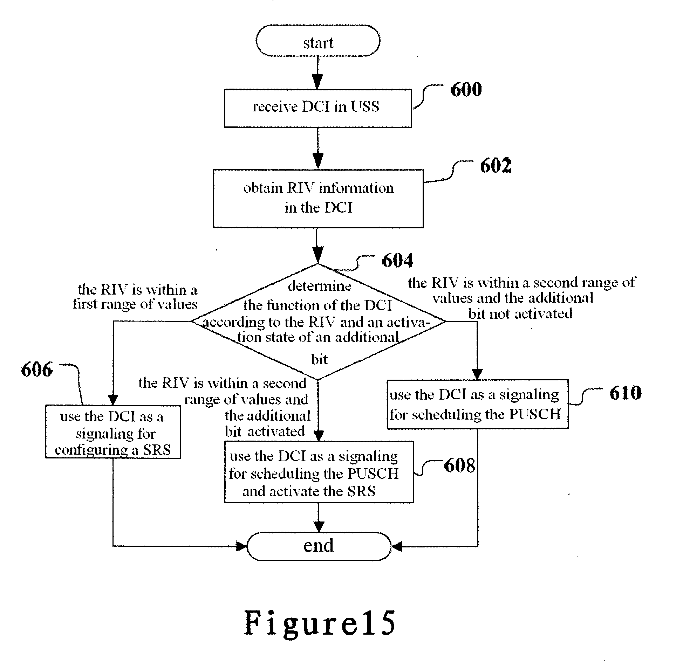

As a substitute embodiment of the sixth embodiment, the function of the DCI can also be determined in the manner shown in Fig. 15. The steps of the substitute embodiment are substantially the same as those of the sixth embodiment, and the difference is the first determination result at the step 604. Specifically, if the RIV is within the first range of values, it can be determined at step 606 that the DCI is used as the signaling for configuring the SRS. If the RIV is within the second range of values and the additional bit is activated, it can be determined that the DCI is used as the signaling for scheduling the PUSCH and the SRS is activated, as shown at step 608. And if the RIV is within the second range of values and the additional bit is not activated, it can be determined at step 610 that the DCI is only used as the signaling for scheduling the PUSCH.

The difference between the substitute embodiment and the sixth embodiment is that when the DCI is used as the signaling for configuring the SRS, the value of the indication bit is not concerned, because it can be considered that the fact that the DCI is used as the signaling for configuring the SRS can mean that the SRS is to be activated. At this time, this additional bit can be used to carrier other information. The problem of whether to use the additional bit to indicate the activation state of the SRS exists only when the DCI is used as the signaling for scheduling the PUSCH. Therefore, only when the DCI is received, it is necessary to further determine the activation state of the additional bit and determine the specific function of the DCI in connection with the value of RIV if the RIV is within the second range of values.

In the sixth and its substitute embodiments, the range of the value of the RIV and (if necessary) the activation state of the additional bit are both determined step 604. Of course, this step can also be divided into two steps, the range of the value of the RIV is determined at first, whether to detect the additional bit is determined according to the range of the value of the RIV, and the additional bit is detected if necessary, so as to determine the function of the DCI. Alternatively, the function of the additional bit can be detected first, and then the range of the value of the RIV is determined; or the both can be detected simultaneously in two operations in parallel. These different manners are only different in form, and are essentially the same as the steps shown in Figs. 14 and 15.

In the fourth to sixth embodiments described above, different ranges of the values can be determined based on whether predetermined bits of the RIV complying with a predetermined distribution pattern. For example, in the case that the system bandwidth is 5 MHz, the predetermined distribution pattern is whether the 2 highest bits in the RIV being both 1. Of course, the 2 highest bits are taken as an example here, the said predetermined pattern is not limited thereto, can also be other suitable distribution patterns, and/or use bits other than the 2 highest bits in the RIV.

After the function of the DCI is determined, the parameter information corresponding to this function can be extracted from the DCI according to this function.

### DCI transmitting device

### Seventh embodiment

A device for transmitting DCI is further provided according to an embodiment of the invention.

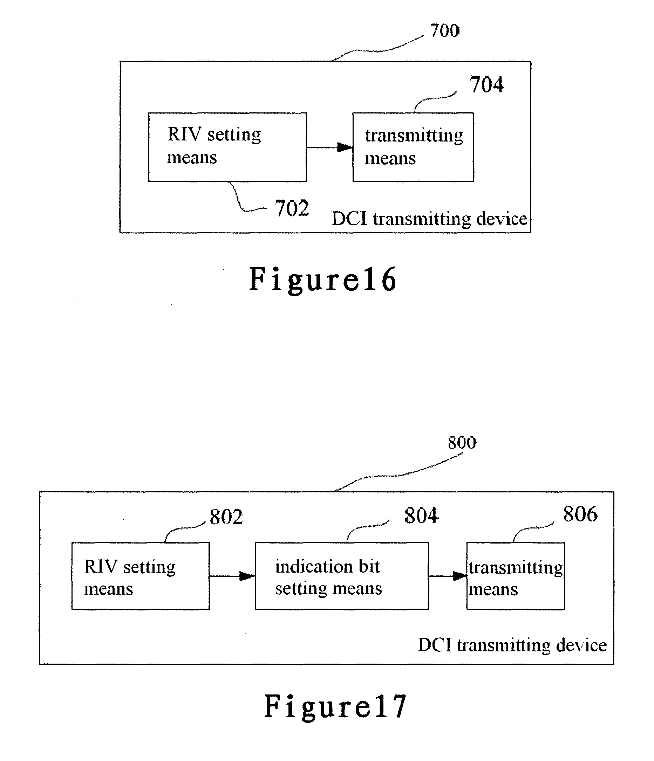

Fig. 16 is a block diagram of a device for transmitting DCI according to an embodiment of the invention. In Fig. 16, the DCI transmitting device 700 includes a RIV setting means 702 and a transmitting means 704. The RIV setting means 702 sets different values to the RIV in the DCI to be transmitted based on the function of the DCI. Wherein, different ranges of the values correspond to different functions of the DCI. The transmitting means 704 transmits the set DCI.

Preferably, the first function of the DCI can be used as the signaling for configuring the SRS, and the second function of the DCI can be used as the signaling for scheduling the PUSCH.

In the following, the instances for setting a value to the RIV in the DCI are described by taking the application in the LTE system as an example. It should be understood that these instances are only examples, but not meant to limit this application, and can be varied according to the particular application scene in a particular implementation.

For example, in the case that the system bandwidth is 5 MHz, the length of the RIV information is 9 bits; and in the case that the system bandwidth is 10 MHz, the length of the RIV information is 11 bits. However, the information contents of the physical time/frequency resource information do not need use all the values of all the bits of the RIV. For example, in the case that the system bandwidth is 5 MHz, the length of the RIV information is 9 bits, which is able to indicate 512 resource allocation combinations, but the physical time/frequency resource information uses only the first 325 combinations actually, leaving 187 combinations unused. Therefore, the RIV of the DCI 0 for indicating the PUSCH scheduling information has no combination with value in the range of 325~511. Thus, according to an embodiment of the invention, the ranges of values of the first 325 combinations can be used to indicate the DCI for scheduling the PUSCH, and the combinations with values in the range of 325~511 can be used to indicate other functions, for example, the entire range of 325~511 are used to indicate that this DCI is a signaling for configuring the SRS.

Specifically, as shown in Fig. 4, Fig. 4 is a schematic diagram of a configuration of DCI for scheduling the PUSCH or for configuring the SRS. In Fig. 4, the example of the allocation of the RIV in the DCI in the case that the system bandwidth is 5 MHz is shown. The first 325 combinations of the 9bits of RIV information in the DCI, i.e., 0-324, are used to indicate that the DCI is used for scheduling the PUSCH, and the last 187 combinations, i.e., 325-511, are used to indicate that the DCI is used for configuring the SRS.

The above case in which the system bandwidth is 5 MHz is only an example. The system can have various bandwidths in practice. Fig. 5 is a schematic diagram of usage of RIV under DCI in several typical bandwidth configurations. As shown in Fig. 5, in the case that the system bandwidth is 10 MHz, in the DCI, the length of the RIV is 11 bits, and the physical resource allocation total number corresponding to RIV is 2¹¹=2048, which indicates 2048 resource allocation combinations. In practice, only 1275 resource allocation combinations are used in the PUSCH, that is to say, other 773 combinations are not used. Other system bandwidths are also shown in Fig. 5, which will not be described in detail here.

Corresponding to the data shown in Fig. 5, Fig. 6 is a schematic diagram of RIV in DCI provided according to an embodiment of the invention. In Fig. 6, the manners for configuring RIV under various system bandwidths are shown. Also taking the system bandwidth of 5 MHz as an example, in the DCI, the length of the RIV is 9 bits, the RIV value range corresponding to DCI for configuring the SRS is 384-511. In this case, the two highest bits in the RIV value corresponding to the PUSCH scheduling can not be both 1 simultaneously, and only the two highest bits in the RIV value corresponding to the SRS configuring can be both 1. Thus, the two highest bits of the 9 bits of the RIV can be used to distinguish the DCI 0 from the DCI for configuring the SRS. Thus, when the DCI is used for configuring the SRS, the other 7 bits can be used to transmit a part of the SRS parameter information. That is to say, similar to the RIV in the DCI used as the signaling for scheduling the PUSCH, the range of the value indicates the function of the DCI, and the specific value thereof transmits other useful parameters.

Similarly, as shown in Fig. 6, in the case that the system bandwidth is 1.4 MHz, whether the two highest bits of the 5 bits being both 1 can be used to distinguish the DCI used as the signaling for scheduling the PUSCH from the DCI used as the signaling for configuring the SRS. In the case that the system bandwidth is 3 MHz, the 4 highest bits of the 7 bits are used; and in the case that the system bandwidth is 10 MHz, 15 MHz, and 20 MHz, the 2 highest bits are used.

Thus, with such signaling design method, the user can effectively distinguish the DCI for configuring the SRS from the DCI for scheduling the PUSCH having the same length, without increasing the blind detection times of the PDCCH, thereby avoiding the increase in the complexity of the mobile station and the increase the impossibility of false alarm.

It is to be noted that the method for distinguishing different functions of the DCI according to whether the several highest effective bits all being 1 is only one of the manners, but not meant to limit the invention. For example, it is possible to distinguish different functions of the DCI according to whether the predetermined numbers of bits in the RIV complying with the predetermined pattern. For example, the value distribution of the RIV for configuring the SRS and scheduling the PUSCH can be redesigned, so that the predetermined pattern of the several highest effective bits can be used as the criterion, or the predetermined pattern of the several lowest effective bits can be used as the criterion. Alternatively, when the DCI is used to achieve 3 or more functions, more bits of distribution patterns may be used to distinguish. Further, when the DCI is used for configuring the SRS, the bits other than the bits for determining the predetermine pattern can also be used to transmit a part of the SRS parameter information. In other words, the distinguishing using several bits of predetermined distribution patterns (including the pattern of all being 1) is only a relatively concise manner for determining the range of the value of the RIV, in which it is also determination of the range of the value of the RIV essentially. The range of the value indicates the function of the DCI, and the specific value is used to transmit other useful parameters. Meanwhile, the range of the values of the RIV that is used to distinguish different functions of the DCI is not necessarily a continual range of value, but may be a set of discrete values or a combination of multiple small ranges of values.

Thus, with the above manner, different DCI can be distinguished by only a part of the RIV bits, so that the signaling overhead is saved, the flexibility is enhanced, and the transmission quality of the signaling is improved.

Fig. 7 is a specific instance of a format of DCI for configuring the SRS. As shown in Fig. 7, the DCI for configuring the SRS has the same length as that of the DCI 0, and has the format as that in the case that the system bandwidth is 3 MHz. As shown in Fig. 7, RIV occupies 7 bits of sources. At the position of the RIV corresponding to DCI 0, the first 4 bits indicate the identification information. If the first 4 bits are all 1, i.e., corresponding to the first ranges of values of the RIV, then it is indicated that this DCI is the DCI for configuring the SRS. If not all the first 4 bits are 1, i.e., corresponding to the second ranges of values of the RIV, then it is indicated that this DCI is the DCI 0 for scheduling the uplink PUSCH. Fig. 7 shows the case in which all the first 4 bits are set to be 1, to indicate that this DCI is the DCI for configuring the SRS. The last 3 bits of the RIV bit position can be redefined as partial parameter information of the SRS configuration, for example, 3 bits can indicate SRS circular shift information. The first bit in this DCI still remains the same as that is defined in the DCI 0 of the LTE system, for distinguishing DCI 1A and DCI 0. If this bit is set to be 0, it is the same as the DCI 0. If this bit is set to be 1, it indicates the DCI 1A. Other positions in the format of the DCI for configuring the SRS are redefined for transmitting the SRS parameter information. For example, 5 bits are used to indicate the frequency domain starting point for SRS transmission, 1 bit is used to indicate the transmission comb position, 1 bit is used to indicate frequency hopping, 1 bit is used for carrier indication, 2 bits are used to indicate the SRS bandwidth, and 2 bits are used for period indication.

It is to be noted that by way of example, 4 highest bits of the RIV are used to distinguish the functions of the DCI here, and other bits are set as to be used to achieve other functions. However, the invention is not limited thereto. According to the specific system bandwidth and configuration requirement, those skilled in the art can use the predetermined pattern of other suitable bits in the RIV to distinguish the functions of the DCI, and set other bits in the DCI as to be used to transmit related parameter information.

### Eighth embodiment

Correspondingly to the second embodiment, the redundancy bits in the DCI can be used to indicate the activation state of the SRS. Fig. 17 is a block diagram of a device for transmitting DCI according to a preferred embodiment of the invention. In Fig. 17, there is provided a DCI transmitting means 800. The DCI transmitting means 800 can include a RIV setting means 802 and a transmitting means 806 which are the same as those in the seventh embodiment. The difference from the seventh embodiment is that the DCI transmitting means 800 can further include an indication bit setting means 804.

Fig. 17 shows only one connection relation of the DCI transmitting means 800. The DCI transmitting means according to the invention is not limited thereto, for example, the indication bit setting means 804 can be provided in a position ahead of the RIV setting means 802. Alternatively, the indication bit setting means 804 and the RIV setting means 802 can be provided in parallel, or even combined together, which will not affect the essence thereof.

Preferably, based on the function of the DCI to be transmitted, the indication bit setting means 802 can set one bit other than the RIV in the DCI as the indication bit, where the indication bit together with the RIV indicates the function of the DCI.

Preferably, the RIV being within a first range of values and the indication bit being activated can indicate that the DCI is used as the signaling for configuring the SRS; the RIV being within a second range of values and the indication bit being activated can indicate that the DCI is used as the signaling for scheduling the PUSCH and the SRS is activated; and the RIV being within the second range of values and the indication bit being not activated can indicate that the DCI is only used as the signaling for scheduling the PUSCH.

As another embodiment, the RIV being within a first range of values can indicate that the DCI is used as the signaling for configuring the SRS; the RIV being within a second range of values and the indication bit being activated can indicate that the DCI is used as the signaling for scheduling the PUSCH and the SRS is activated; and the RIV being within the second range of values and the indication bit being not activated can indicate that the DCI is only used as the signaling for scheduling the PUSCH. The present embodiment is distinguished from the previous embodiment in that when the DCI is used as the signaling for configuring the SRS, the value of the indication bit is not concerned, because it can be considered that the fact that the DCI is used as the signaling for configuring the SRS can mean that the SRS is to be activated. The problem of whether to use the indication bit to indicate the activation state of the SRS exists only when the DCI is used as the signaling for scheduling the PUSCH.

It is to be noted that as an example, the redundancy bit shown in Fig. 8 is adopted here as the indication sign of the activation state of the SRS. The invention is not limited thereto, and those skilled in the art can adopt the redundancy bit on other position in the DCI as the sign of the activation state of the SRS.

Specifically, in the instance shown in Fig. 8, in the DCI for configuring the SRS, the one redundancy bit for the SRS activation in the DCI 0 (the last bit in Fig. 8) can still be used as the indication bit, but bits at other positions can also be used as the indication bit. Other positions in the format of the DCI for configuring the SRS are all redefined for transmitting SRS parameter information. For example, 2 bits are used for period indication, 2 bits are used to indicate the power control, and 1 bit is reserved as redundancy bit.

As describe above, if the one redundancy bit for SRS activation is in the activate state of the SRS, and the 2 highest bits of the RIV are both 1, then this DCI is the DCI for configuring the SRS. If the one corresponding redundancy bit for SRS activation is in the activate state of the SRS, and not both the 2 highest bits of the RIV are 1, then this DCI is the DCI 0 used as the signaling for scheduling the PUSCH, in which the SRS activation is contained. If the corresponding one redundancy bit for SRS activation is in the non-activate state of the SRS, and not both the 2 highest bits of the RIV are 1, then this DCI is the DCI 0 used for scheduling the PUSCH. As another embodiment, when the 2 highest bits of the RIV are both 1, this DCI is used as the DCI for configuring SRS, no matter whether the one redundancy bit is in the activate state of the SRS. At this time, this one redundancy bit can be used to carrier other information.

### Ninth embodiment

In the seventh and eighth embodiments of the invention described above, the DCI for configuring the SRS is described. This new DCI has the same length as that of the DCI for indicating the PUSCH in the LTE system, that is, has the same length as that of the DCI 0 in the LTE system.

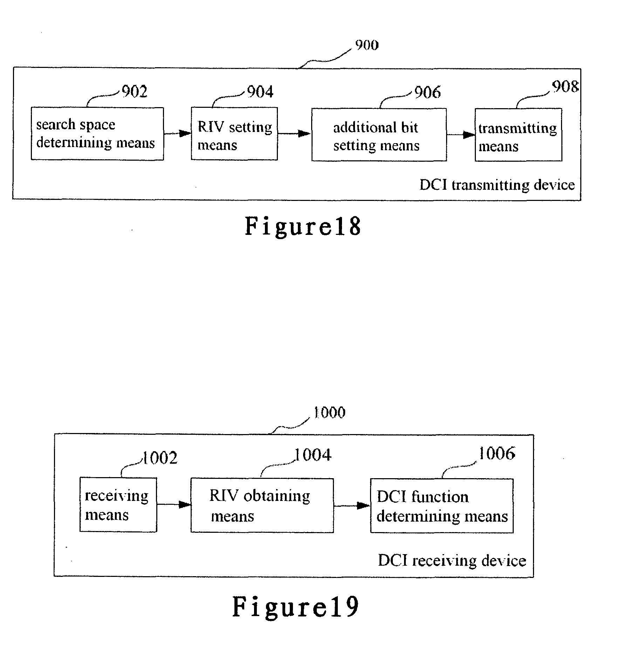

Of course, the DCI can have different length from that of the DCI 0, such as the PUSCH DCI 0' redefined to be used under the single port transmission mode in the LTE-A system. Fig. 18 is a block diagram of a device for transmitting DCI according to a preferred embodiment of the invention. In Fig. 18, a DCI transmitting device 900 is provided. The DCI transmitting device 900 can include a RIV setting means 904 and a transmitting means 908 which are the same as those in the seventh embodiment. Further, the difference from the seventh embodiment is that the DCI transmitting device 900 can further include a search space determining means 902, which is used to determine whether the DCI is to be transmitted in the CSS or in the USS; and an additional bit setting means 906, which can add, if the DCI is to be transmitted in the USS, one additional bit into the DCI as compared with that in the CSS. Here, the added one additional bit can be used only to increase the length of the DCI, without concerning the specific value thereof. The additional bit can carrier the information with specific function, and can also be used as a redundancy bit.

Fig. 18 shows only one connection relation of the DCI transmitting means 900. The DCI transmitting means according to the invention is not limited thereto, for example, the position of the additional bit setting means 906 and the position of the RIV setting means 904 can be exchanged. Alternatively, the additional bit setting means 906 and the RIV setting means 904 can be provided in parallel, or even combined together, which will not affect the essence thereof.

Preferably, the additional bit setting means can be configured to set a value to the additional bit based on the function of the DCI to be transmitted, and this additional bit together with the RIV indicates the function of the DCI.

Preferably, the RIV being within a first range of values and the additional bit being activated can indicate that the DCI is used as the signaling for configuring the SRS; the RIV being within a second range of values and the additional bit being activated can indicate that the DCI is used as the signaling for scheduling the PUSCH and the SRS is activated; and the RIV being within the second range of values and the additional bit being not activated can indicate that the DCI is only used as the signaling for scheduling the PUSCH.

As another embodiment, the RIV being within a first range of values can indicate that the DCI is used as the signaling for configuring the SRS; the RIV being within a second range of values and the additional bit being activated can indicate that the DCI is used as the signaling for scheduling the PUSCH and the SRS is activated; and the RIV being within the second range of values and the additional bit being not activated can indicate that the DCI is only used as the signaling for scheduling the PUSCH. The present embodiment is distinguished from the previous embodiment in that when the DCI is used as the signaling for configuring the SRS, the value of the indication bit is not concerned, because it can be considered that the fact that the DCI is used as the signaling for configuring the SRS can mean that the SRS is to be activated. At this time, this additional bit can be used to carrier other information. The problem of whether to use the indication bit to indicate the activation state of the SRS exists only when the DCI is used as the signaling for scheduling the PUSCH.

In the seventh and eighth embodiments described above, different ranges of the values can be determined based on whether predetermined bits of the RIV complying with a predetermined distribution pattern. For example, in the case that the system bandwidth is 5 MHz, the predetermined distribution pattern can be whether the 2 highest bits in the RIV being all 1. Of course, the predetermined distribution pattern described here is not limited thereto, can also be other suitable distribution patterns, and/or use bits other than the 2 highest bits in the RIV.

Fig. 9 is a schematic diagram of an instance of a format of DCI according to a preferred embodiment of the invention. In Fig. 9, the DCI for configuring the SRS has the same length as that of the DCI 0'. Fig. 9 shows the configuration of the DCI in the case that the system bandwidth is 5 MHz. Same to that described in the eighth embodiment, on the 9-bit position of the RIV corresponding to DCI 0, and the first 2 bits are used as the indication information. Where the bits being both set as 1 indicates that this DCI is the DCI used for configuring the SRS, otherwise, this DCI is the DCI for scheduling the PUSCH, that is, DCI 0'. When the DCI is used for configuring the SRS, the last 7 bits in the RIV bit position are redefined as parameter information of the SRS configuration, for example, as shown in the Figure, 5 bits indicate the frequency domain starting point for SRS transmission, and 2 bits indicate SRS bandwidth. The first bit of this DCI is used to distinguish the DCI 1A from the DCI 0'. If this bit is set to be 0, this DCI is the same as the DCI 0'; and if this bit is set to be 1, it indicates the DCI 1A.

The one additional bit corresponding to the SRS activation bit in the DCI 0' can also be used to indicate the activation state of the SRS (of course, bit on other position can also be used as the indication bit). Other positions in the format of the DCI for configuring the SRS are all redefined for transmitting SRS parameter information. For example, 1 bit indicates the duration, 3 bits indicate the SRS circular shift information, 2 bits are used for period indication, 2 bits are used to indicate the power control, and 1 bit is reserved as redundancy bit. Other settings are the same as those in the eighth embodiment, which will not be described in detail here.

As describe above, if the one additional bit for SRS activation is in the activate state of the SRS, and the 2 highest bits of the RIV are both 1, then this DCI is the DCI for configuring the SRS. If the one additional bit for SRS activation is in the activate state of the SRS, and not both the 2 highest bits of the RIV are 1, then this DCI is the DCI 0' used as the signaling for scheduling the PUSCH, in which the SRS activation is contained. If the one additional bit for SRS activation is in the non-activate state of the SRS, and not both the 2 highest bits of the RIV are 1, this DCI is the DCI 0' used for scheduling the PUSCH. As another embodiment, when the 2 highest bits of the RIV are both 1, this DCI can be used as the DCI for configuring SRS, no matter whether the one additional bit is in the activate state of the SRS. At this time, this one additional bit can be used to carrier other information.

### DCI receiving device

### Tenth embodiment

Correspondingly to the fourth embodiment described above, a DCI receiving device is also provided by the invention. Fig. 19 is a block diagram of a device for receiving DCI according to an embodiment of the invention. As shown in the Figure, a DCI receiving device 1000 is provided. The DCI receiving device 1000 includes a receiving means 1002 for receiving the DCI; a RIV obtaining means 1004 for obtaining the RIV in the DCI; and a DCI function determining means 1006 for determining the function of the DCI according to the value of the RIV, where different ranges of the values correspond to different functions of the DCI.

Preferably, if the RIV is within the first range of values, the DCI function determining means can determine that this DCI is used as the signaling for configuring the SRS; and if the RIV is within the second range of values, the DCI function determining means can determine that this DCI is used as the signaling for scheduling the PUSCH.

Preferably, the DCI function determining means can be further configured to determine the function of the DCI based on whether predetermined bits of the RIV complying with a predetermined distribution pattern.

As a preferred embodiment, the DCI function determining means can be configured to determine the function of the DCI based on whether the predetermined consecutive bits of the RIV being all 1. As to the description of the predetermined distribution pattern and the predetermined consecutive bits being all 1, reference can be made to the description of the first and seventh embodiments.

Taking the DCI configuration shown in Fig. 7 as an example, in this case, the DCI for configuring the SRS has the same length as that of the DCI 0 in the LTE system. If in the case that the system bandwidth is 3 MHz, the 4 highest bits of the RIV are all 1, that is, corresponding to the first range of values of the RIV, it indicates that this DCI is the DCI for configuring the SRS. If the 4 highest bits of the RIV are not all 1, that is, corresponding to the second range of values of the RIV, this DCI is the DCI 0 for scheduling the uplink PUSCH.

After the function of the DCI is determined, the parameter information corresponding to this function can be extracted from the DCI according to this function.

### Eleventh embodiment

In the tenth embodiment according to the invention, the received DCI has the same length as that of the DCI 0, and the function of the DCI is determined directly by detecting the RIV in the DCI. Correspondingly, if the redundancy bit in the DCI is used to indicate the activation state of the SRS during the transmission, it is necessary to further detect this redundancy bit after the DCI is received.

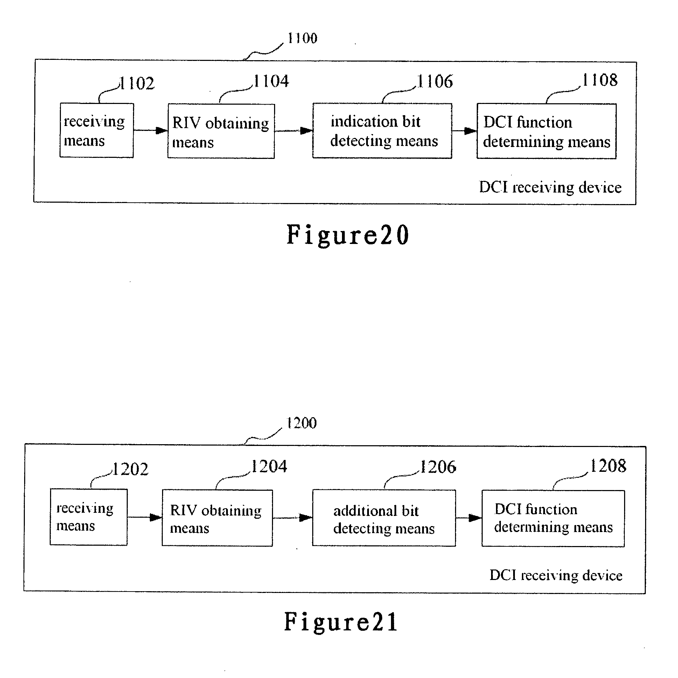

Fig. 20 is a block diagram of a device for receiving DCI according to a preferred embodiment of the invention. As shown in the Figure, a DCI receiving device 1100 is provided. The DCI receiving device 1100 can include a receiving means 1102, a RIV obtaining means 1104 and a DCI function determining means 1108 same as those in the tenth embodiment. Further, the difference from the tenth embodiment is that the DCI receiving device 1100 can further include an indication bit detection means 1106 for detecting the activation state of the indication bit other than the RIV in the DCI, wherein the DCI function determining means 1108 can be configured to determine the function of the DCI according to the activation state of the indication bit and the RIV

Preferably, if the RIV is within the first range of values and the indication bit is in the activate state, the DCI function determining means can determine that this DCI is used as the signaling for configuring the SRS. If the RIV is within the second range of values and the indication bit is activated, the DCI function determining means can determine that this DCI is used as the signaling for scheduling the PUSCH and the SRS is activated. If the RIV is within the second range of values and the indication bit is not activated, the DCI function determining means can determine that this DCI is only used as the signaling for scheduling the PUSCH.

Preferably, as a substitute embodiment of the embodiment described above, the function of the DCI can also be determined as follows. If the RIV is within the first range of values, the DCI function determining means can determine that the DCI is used as the signaling for configuring the SRS; if the RIV is within the second range of values and the indication bit is activated, the DCI function determining means can determine that the DCI is used as the signaling for scheduling the PUSCH and the SRS is activated; and if the RIV is within the second range of values and the indication bit is not activated, the DCI function determining means can determine that the DCI is only used as the signaling for scheduling the PUSCH.

The difference between the substitute embodiment and the eleventh embodiment is that when the DCI is used as the signaling for configuring the SRS, the value of the indication bit is not concerned, because it can be considered that the fact that the DCI is used as the signaling for configuring the SRS can mean that the SRS is to be activated. The problem of whether to use the indication bit to indicate the activation state of the SRS exists only when the DCI is used as the signaling for scheduling the PUSCH. Therefore, when the DCI is received, it is necessary to further determine the activation state of the indication bit and determine the specific function of the DCI in connection with the value of the RIV only if the RIV is within the second range of values.

As an example, the redundancy bit in the DCI is used as the sign for detecting the activation state of the SRS, as shown in Fig. 8. Fig. 8 shows the configuration of the DCI in the case that the system bandwidth is 5 MHz. Preferably, when the DCI is received, if the corresponding one redundancy bit for activating the SRS is in the activate state of the SRS, and the 2 highest bits of the RIV are both 1, this DCI is the DCI for configuring the SRS. If the one redundancy bit for activating the SRS is in the activate state of the SRS, and the 2 highest bits of the RIV are not both 1, this DCI is the DCI 0 for scheduling the PUSCH containing the SRS activation. If the one redundancy bit for activating the SRS is in the non-activate state of the SRS, and the 2 highest bits of the RIV are not both 1, this DCI is the DCI 0 for scheduling the PUSCH.

In the eleventh and substitute embodiments described above, one connection relation of the DCI receiving device is given. The DCI receiving device according to the invention is not limited thereto, for example, the position of the indication bit detecting means 1106 can be arranged ahead of the RIV obtaining means 1104. That is to say, the indication bit can be detected first, and then the RIV can be obtained. Alternatively, the indication bit detecting means 1106 and the RIV obtaining means 1104 can be provided in parallel, or even combined together, which are only different in form and do not affect the essence thereof.

It is to be noted that, as an example, corresponding to the transmission of the DCI, the 2 highest bit of the RIV is used to distinguish the functions of the DCI, but the invention is not limited thereto. Those skilled in the art can set by using other suitable bits in the RIV according to the specific system bandwidth and configuration requirement. For example, when the DCI is transmitted, if the bits other than the 2 highest bits (for example, in the case that the system bandwidth is 5 MHz) in the RIV are used to configure. Correspondingly, when the DCI is received, corresponding adjustment needs to be made to detect the function of the DCI. Similarly, as shown in Fig. 8, if other redundancy bit in the DCI is adopted as the sign of the activation state of the SRS, it is necessary to change correspondingly the detection position of this indication bit in the eleventh embodiment described above, so as to detect the function of the DCI.

After the function of the DCI is determined, the parameter information corresponding to this function can be extracted from the DCI according to this function.

### Twelfth embodiment

In the tenth and eleventh embodiments according to the invention described above, because when the DCI is transmitted, the DCI for configuring the SRS is made have the same bit length as that of the DCI for indicating the uplink PUSCH0 in the LTE system, i.e., the length of the DCI 0 in the LTE system, the function of the DCI is determined by using the corresponding detection method.

If one additional bit is introduced for activating the SRS so as to make the DCI has the same length as that of the DCI 0' when the DCI is transmitted, a device for detecting this additional bit needs to be added when the DCI is received.

Fig. 21 is a block diagram of a device for receiving DCI according to a preferred embodiment of the invention. In Fig. 21, a DCI receiving device 1200 is provided. Same as the tenth embodiment, the DCI receiving device 1200 can include a receiving means 1202, a RIV obtaining means 1204 and a DCI function determining means 1208. Further, the difference from the tenth embodiment is that the DCI receiving device 1200 can further include an additional bit detecting means 1206 for detecting the activation state of the additional bit that is added into the DCI when the DCI is to be received in the USS, wherein the DCI function determining means 1208 can be configured to determine the function of the DCI according to the RIV and the activation state of the additional bit.

Preferably, if the RIV is within the first range of values and the additional bit is activated, the DCI function determining means can determine that this DCI is used as the signaling for configuring the SRS. If the RIV is within the second range of values and the additional bit is activated, the DCI function determining means can determine that this DCI is used as the signaling for scheduling the PUSCH and the SRS is activated. If the RIV is within the second range of values and the additional bit is not activated, the DCI function determining means can determine that this DCI is only used as the signaling for scheduling the PUSCH.

As a substitute embodiment of the above twelfth embodiment, the function of the DCI can also be determined as follows. If the RIV is within the first range of values, the DCI function determining means can determine that the DCI is used as the signaling for configuring the SRS. If the RIV is within the second range of values and the additional bit is activated, the DCI function determining means can determine that the DCI is used as the signaling for scheduling the PUSCH and the SRS is activated. And if the RIV is within the second range of values and the additional bit is not activated, the DCI function determining means can determine that the DCI is only used as the signaling for scheduling the PUSCH.

The difference between the substitute embodiment and the sixth embodiment is that when the DCI is used as the signaling for configuring the SRS, the value of the indication bit is not concerned, because it can be considered that the fact that the DCI is used as the signaling for configuring the SRS can mean that the SRS is to be activated. At this time, this additional bit can be used to carrier other information. The problem of whether to use the additional bit to indicate the activation state of the SRS exists only when the DCI is used as the signaling for scheduling the PUSCH. Therefore, only when the DCI is received, it is necessary to further determine the activation state of the additional bit and determine the specific function of the DCI in connection with the value of the RIV if the RIV is within the second range of values.

In the twelfth and substitute embodiments described above, only one connection relation of the DCI receiving device is given. The DCI receiving device according to the invention is not limited thereto, for example, the position of the additional bit detecting means 1206 can be arranged ahead of the RIV obtaining means 1204. That is to say, the additional bit can be detected first, and then the RIV can be obtained. Alternatively, the additional bit detecting means 1206 and the RIV obtaining means 1204 can be provided in parallel, or even combined together, which are only different in form and do not affect the essence thereof.

In the tenth to twelfth embodiments described above, different ranges of the values can be determined based on whether predetermined bits of the RIV complying with a predetermined distribution pattern. For example, in the case that the system bandwidth is 5 MHz, the predetermined distribution pattern is whether the 2 highest bits in the RIV being both 1. Of course, the predetermined distribution pattern described here is not limited thereto, but can also be other suitable distribution patterns, and/or use bits other than the 2 highest bits in the RIV.

After the function of the DCI is determined, the parameter information corresponding to this function can be extracted from the DCI according to this function.

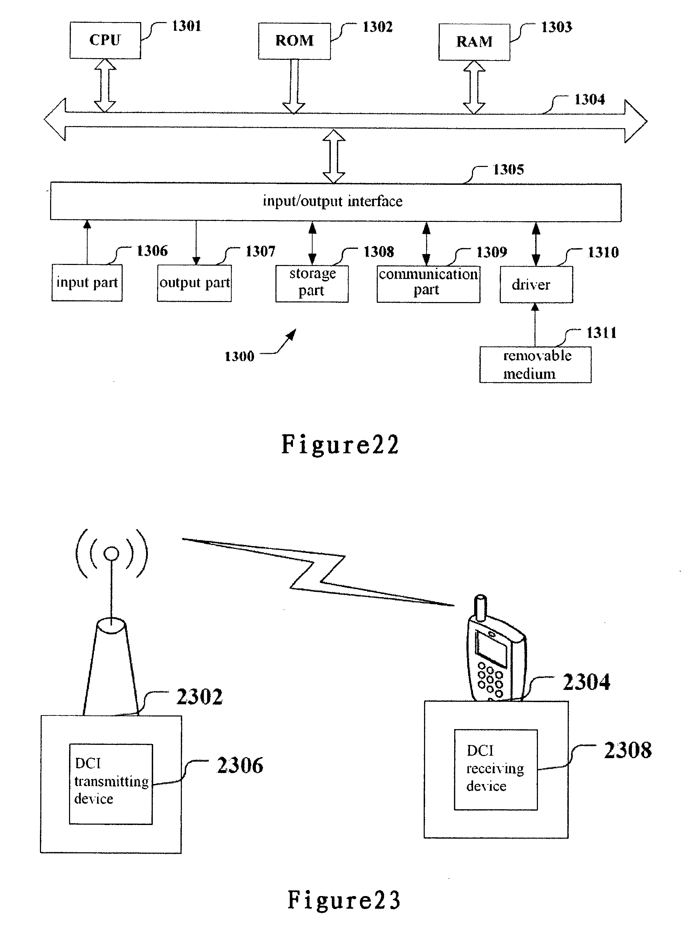

Various composite modules and units in the above devices can be configured by means of software, firmware, hardware or combination thereof. The specific means or manners available to the configuration are well known to those skilled in the art, which will not be described in detail here. When implemented in software or firmware, the program consisting this software is installed from the storage medium or network to the computer with the dedicate hardware configure (such as the general-purpose computer 1300 shown in Fig. 22), when mounted with various programs, the computer can perform various functions, etc.

In Fig. 22, the central processing unit (CPU) 1301 performs various processes according to the program stored in the read-only memory (ROM) 1302 or the program that is loaded from the storage part 1308 to the random access memory (RAM) 1303. In the RAM 1303, the data necessary for the CPU 1301 to perform various processes is also stored as necessary. The CPU 1301, the ROM 1302 and the RAM 1303 are connected to each other via the bus 1304. The input/output interface 1305 is also connected to the bus 1304.

The following components are connected to the input/output interface 1305: the input part 1306 (including the key board, the mouse and the like), the output part 1307 (including the display, such as the cathode ray tube (CRT), liquid crystal display (LCD), and the like, the speaker and the like), the storage part 1308 (including the hard disk and the like), and the communication part 1309 (including the network interface card, such as the LAN card, the modem and the like). The communication part 1309 performs the communication process via the network such as the Internet. The driver 1310 can be connected to the input/output interface 1305 as necessary. The removable medium 1311, such as the magnetic disk, the optical disk, the magnetic optical disk, the semiconductor storage and the like, is mounted onto the driver 1310 as required, so that the computer program that is read out therefrom can be mounted into the storage part 1308 as required.

In the case that the above serious processes are implemented by software, the program consisting the software is installed from the network such as the Internet or the storage medium such as the removable medium 1311.

It is to be understood by those skilled in the art that such storage medium is not limited to the removable medium 1011 that is shown in Fig. 22, in which medium the program is stored, and which is distributed separately from the device so as to provide the user with the program. The example of the removable medium 1311 includes the magnetic disk (including the Floppy Disk (registered trade mark)), optical disk (including the compact disk read-only memory (CD-ROM) and the digital vertical disk (DVD)), magnetic optical disk (including the mini disk (MD) (registered trade mark)) and the semiconductor storage. Alternatively, the storage medium can be the ROM 1302, the hard disk included in the storage part 1308, or the like, in which the program is stored, and is distributed to the user together with the device in which they are included.

### Base station, terminal and communication system

According to an embodiment of the invention, in addition to the above DCI transmitting device and the DCI receiving device, correspondingly, a base station and terminal including the above DCI transmitting device and DCI receiving device can also be constructed, respectively.

Further, according to the embodiment of the invention, a communication system including the above base station and the above terminal is provided. As shown in Fig. 23, the communication system includes a base station 2302 and a terminal 2304. The base station can include the above DCI transmitting device 2306, and the terminal can include the above DCI receiving device 2308.

Further, the communication system generally includes multiple base stations and multiple terminals. The base stations and the terminals may include the old versions or the updated version according to the embodiment of the invention. At this time, according to an embodiment of the invention, the communication system should be compatible with various versions. That is to say, the DCI transmitting device and the DCI receiving device can use or not use the DCI transmitting methods and the DCI receiving methods provided in the embodiments of this application. That is to say, this application further provides such an embodiment that the communication system includes the DCI transmitting device 2306 and the DCI receiving device 2308 (as shown in Fig. 23), in which the communication system use the DCI transmitting methods and the DCI receiving methods provided in the embodiments of this application, that is to say, the DCI transmitting device 2306 uses the above DCI transmitting methods, and/or the DCI receiving device 2308 uses the above DCI receiving methods.

Further, it should be understood that various examples and embodiments described herein are all exemplary, and the invention is not limited to the LTE system or the LTE-A system. By performing appropriate modifying, adding, deleting or substituting based on the above disclosure of this application, those skilled in the art are also able to make the invention suitable for a higher version of system than the LTE-A system. The reference numerals are only to describe the invention more clearly. Therefore, the reference numerals should not be deemed as having any restrictive meaning.

A program product in which machine-readable instruction codes are stored is also provided by the invention. The instruction codes, when read and performed by the machine, can perform the above methods according to the embodiments of the invention.

Correspondingly, the storage medium for carrying the above program product in which the machine-readable instruction codes are stored is also included in the disclosure of the invention. The storage medium includes but not limited to the floppy disk, the optical disk, the magnetic disk, the storage card, the storage stick, and the like.

Apparently, in the device and method according to the invention, various components or various steps can be decomposed, combined and/or decomposed and then re-combined. There decompositions and/or re-combinations should be deemed as equivalents of the invention.

It is further to be noted that the steps for processing the serious processes described above can be performed in the chronological order in accordance with the described order naturally, but not necessarily to be performed in the chronological order. Some steps can be performed in parallel or independently.

Further, although the description has been given one embodiment by one embodiment above, it should be understood that the various embodiments are not isolated. Apparently, after reading this application document, those skilled in the art can understand that various technical features included in the various embodiments can be composed in any manner among the various embodiments, as long as there is no conflict between them. Of course, all the technical features mentioned in one embodiment can also be combined in any manner, as long as there is no conflict between them.

Finally, terms "include", "contain" or any other variations thereof are intended to be non-exclusive, so that the procedure, method, article or device including a serious of elements not only includes these elements but also includes other elements that are not listed explicitly, or includes the elements that is inherent in such procedure, method, article or device. Further, without any more limitation, the element defined by the sentence "including one..." does not exclude that further identical elements will exist in the procedure, method, article or device including said element.

## Claims

1. A method for transmitting downlink control information (DCI), comprising:
setting (100, 200) different values to a resource indication value (RIV) in the DCI to be transmitted based on the function of the DCI, wherein different ranges of the values correspond to different functions of the DCI; and
transmitting (102, 202) the DCI,
**characterized in that** a first function (406) of the DCI is to be used as a signaling for configuring an uplink sounding reference signal (SRS), and a second function (408) of the DCI is to be used as a signaling for scheduling a physical uplink shared channel (PUSCH).

2. The method for transmitting DCI of claim 1, further comprising: setting (200) one bit other than the RIV in the DCI to be transmitted as an indication bit based on the function of the DCI, wherein the indication bit together with the RIV indicates the function of the DCI.

3. The method for transmitting DCI of claim 2, wherein the RIV being within a first range of values and the indication bit being activated indicate that the DCI is used as the signaling for configuring the SRS; the RIV being within a second range of values and the indication bit being activated indicate that the DCI is used as the signaling for scheduling the PUSCH and the SRS is to be activated; and the RIV being within the second range of values and the indication bit being not activated indicate that the DCI is only used as the signaling for scheduling the PUSCH.

4. The method for transmitting DCI of claim 2, wherein the RIV being within a first range of values indicates that the DCI is used as the signaling for configuring the SRS; the RIV being within a second range of values and the indication bit being activated indicate that the DCI is used as the signaling for scheduling the PUSCH and the SRS is to be activated; and the RIV being within the second range of values and the indication bit being not activated indicate that the DCI is only used as the signaling for scheduling the PUSCH.

5. The method for transmitting DCI of claim 1, further comprising:
determining (300) whether the DCI is to be transmitted in a common search space (CSS) or in a UE-specific search space (USS);
wherein if the DCI is to be transmitted in the USS, one additional bit is added into the DCI compared with in the CSS (304).

6. The method for transmitting DCI of claim 5, further comprising: setting (304) a value to the additional bit based on the function of the DCI to be transmitted, wherein the additional bit together with the RIV indicates the function of the DCI.

7. The method for transmitting DCI of claim 6, wherein the RIV being within a first range of values and the additional bit being activated indicate that the DCI is used as the signaling for configuring the SRS; the RIV being within a second range of values and the additional bit being activated indicate that the DCI is used as the signaling for scheduling the PUSCH and the SRS is to be activated; and the RIV being within the second range of values and the additional bit being not activated indicate that the DCI is only used as the signaling for scheduling the PUSCH.

8. The method for transmitting DCI of claim 6, wherein the RIV being within a first range of values indicates that the DCI is used as the signaling for configuring the SRS; the RIV being within a second range of values and the additional bit being activated indicate that the DCI is used as the signaling for scheduling the PUSCH and the SRS is to be activated; and the RIV being within the second range of values and the additional bit being not activated indicate that the DCI is only used as the signaling for scheduling the PUSCH.

9. A method for receiving downlink control information (DCI), comprising:
receiving (400, 500, 600) the DCI;
acquiring (402, 502, 602) a resource indication value (RIV) in the DCI; and
determining (404, 404', 504, 604) the function of the DCI based on values of the RIV, wherein different ranges of the values correspond to different functions of the DCI,
**characterized in that** a first function (406) of the DCI is to be used as a signaling for configuring an uplink sounding reference signal (SRS), and a second function (408) of the DCI is to be used as a signaling for scheduling a physical uplink shared channel (PUSCH).

10. The method for receiving DCI of claim 9, further comprising: detecting an activation state of one indication bit other than the RIV in the DCI, wherein determining the function of the DCI comprises determining (504, 604) the function of the DCI based on the RIV together with the activation state of the indication bit.

11. A device (700, 800, 900) for transmitting downlink control information (DCI), comprising:
resource indication value (RIV) setting means (702, 802, 904) for setting different values to the RIV in the DCI to be transmitted based on the function of the DCI, wherein different ranges of the values correspond to different functions of the DCI; and
transmitting means (704, 806, 908) for transmitting the DCI,
**characterized in that** a first function (406) of the DCI is to be used as a signaling for configuring an uplink sounding reference signal (SRS), and a second function (408) of the DCI is to be used as a signaling for scheduling a physical uplink shared channel (PUSCH).

12. A device (1000, 1100, 1200) for receiving downlink control information (DCI), comprising:
receiving means (1002, 1102, 1202) for receiving the DCI;
resource indication value (RIV) acquiring means (1004, 1104, 1204) for acquiring the RIV in the DCI; and
DCI function determining means (1006, 1108, 1208) for determining the function of the DCI based on values of the RIV, wherein the different ranges of the values correspond to different functions of the DCI,
**characterized in that** a first function (406) of the DCI is to be used as a signaling for configuring an uplink sounding reference signal (SRS), and a second function (408) of the DCI is to be used as a signaling for scheduling a physical uplink shared channel (PUSCH).

## Patentansprüche

1. Verfahren zur Übertragung von Downlink-Steuerinformationen (DCI), aufweisend:
Einstellen (100, 200) unterschiedlicher Werte für einen Ressourcenindikatorwert (RIV) in den DCI zum Übertragen auf Basis der Funktion der DCI, wobei unterschiedliche Bereiche der Werte unterschiedlichen Funktionen der DCI entsprechen; und
Übertragen (102, 202) der DCI,
**dadurch gekennzeichnet, dass** eine erste Funktion (406) der DCI als eine Signalisierung zum Konfigurieren eines Uplink-Tonreferenzsignals (SRS) und eine zweite Funktion (408) der DCI als eine Signalisierung zum Planen eines physikalischen Uplink-Kanals (PUSCH) zu benutzen ist.

2. Verfahren zur Übertragung von DCI nach Anspruch 1, ferner aufweisend: Einstellen (200) eines anderen Bits als des RIV in den DCI zum Übertragen als ein Indikationsbit auf Basis der Funktion der DCI, wobei das Indikationsbit zusammen mit dem RIV die Funktion der DCI angibt.

3. Verfahren zur Übertragung von DCI nach Anspruch 2, wobei der RIV, der innerhalb eines ersten Bereichs von Werten liegt, und das Indikationsbit, das aktiviert ist, angeben, dass die DCI als die Signalisierung zum Konfigurieren des SRS benutzt werden; der RIV, der innerhalb eines zweiten Bereichs von Werten liegt, und das Indikationsbit, das aktiviert ist, angeben, dass der RIV als die Signalisierung zum Planen des PUSCH benutzt wird, und das SRS zu aktivieren ist; und der RIV, der innerhalb des zweiten Bereichs von Werten liegt, und das Indikationsbit, das nicht aktiviert ist, angeben, dass die DCI nur als die Signalisierung zum Planen des PUSCH benutzt wird.

4. Verfahren zur Übertragung von DCI nach Anspruch 2, wobei der RIV, der innerhalb eines ersten Bereichs von Werten liegt, angibt, dass die DCI als die Signalisierung zum Konfigurieren des SRS benutzt wird; der RIV, der innerhalb eines zweiten Bereichs von Werten liegt, und das Indikationsbit, das aktiviert ist, angeben, dass die DCI als die Signalisierung für die Planung des PUSCH zu benutzen und das SRS zu aktivieren ist; und der RIV, der innerhalb des zweiten Bereichs von Werten liegt, und das Indikationsbit, das nicht aktiviert ist, angeben, dass die DCI nur als die Signalisierung zum Planen des PUSCH benutzt wird.

5. Verfahren zur Übertragung von DCI nach Anspruch 1, ferner aufweisend:
Bestimmen (300), ob die DCI in einen gemeinsamen Suchraum (CSS) oder in einen UE-spezifischen Suchraum (USS) zu übertragen sind;
wobei, wenn die DCI in den USS zu übertragen sind, ein zusätzliches Bit in die DCI verglichen mit in den CSS (304) hinzugefügt wird.

6. Verfahren zur Übertragung von DCI nach Anspruch 5, ferner aufweisend: Einstellen (304) eines Werts für das zusätzliche Bit auf Basis der Funktion der zu übertragenden DCI, wobei das zusätzliche Bit zusammen mit dem RIV die Funktion der DCI angibt.

7. Verfahren zur Übertragung von DCI nach Anspruch 6, wobei der RIV, der innerhalb eines ersten Bereichs von Werten liegt, und das zusätzliche Bit, das aktiviert ist, angeben, dass die DCI als die Signalisierung zum Konfigurieren des SRS benutzt werden; der RIV, der innerhalb eines zweiten Bereichs von Werten liegt, und das zusätzliche Bit, das aktiviert ist, angeben, dass die DCI als die Signalisierung zum Planen des PUSCH benutzt wird und das SRS zu aktivieren ist; und der RIV, der innerhalb eines zweiten Bereichs von Werten liegt, und das zusätzliche Bit, das nicht aktiviert ist, angeben, dass die DCI nur als die Signalisierung zum Planen des PUSCH benutzt wird.

8. Verfahren zur Übertragung von DCI nach Anspruch 6, wobei der RIV, der innerhalb eines ersten Bereichs von Werten liegt, angibt, dass die DCI als die Signalisierung zum Konfigurieren des SRS benutzt wird; der RIV, der innerhalb eines zweiten Bereichs von Werten liegt, und das zusätzliche Bit, das aktiviert ist, angeben, dass die DCI als die Signalisierung zum Planen des PUSCH benutzt wird und das SRS zu aktivieren ist; und der RIV, der innerhalb des zweiten Bereichs von Werten liegt, und das zusätzliche Bit, das nicht aktiviert ist, angeben, dass die DCI nur als die Signalisierung zum Planen des PUSCH benutzt werden.

9. Verfahren zum Empfangen von Downlink-Steuerinformationen (DCI), aufweisend:
Empfangen (400, 500, 600) der DCI;
Beziehen (402, 502, 602) eines Ressourcenindikationswerts (RIV) in den DCI; und
Bestimmen (404, 404', 504, 604) der Funktion der DCI auf Basis der Werte des RIV, wobei unterschiedliche Bereiche der Werte unterschiedlichen Funktionen der DCI entsprechen,
**dadurch gekennzeichnet, dass** eine erste Funktion (406) der DCI als eine Signalisierung zum Konfigurieren eines Uplink-Tonreferenzsignals (SRS) zu benutzen ist und eine zweite Funktion (408) der DCI als eine Signalisierung zum Planen eines physikalischen Uplink-Kanals (PUSCH) zu benutzen ist.

10. Verfahren zum Empfangen von DCI nach Anspruch 9, ferner aufweisend: Erkennen eines Aktivierungsstatus von eines anderen Bits als des RIV in den DCI, wobei das Bestimmen der Funktion der DCI ein Bestimmen (504, 604) der Funktion der DCI auf Basis des RIV zusammen mit dem Aktivierungsstatus des Indikationsbits umfasst.

11. Vorrichtung (700, 800, 900) zum Übertragen von Downlink-Steuerinformationen (DCI), aufweisend:
Mittel (702, 802, 904) zur Ressourcenindikationswert-(RIV-)-Festlegung zum Festlegen unterschiedlicher Werte beim RIV in den zu übertragenden DCI, wobei unterschiedliche Bereiche der Werte unterschiedlichen Funktionen der DCI entsprechen; und
Übertragungsmittel (704, 806, 908) zum Übertragen der DCI;
**dadurch gekennzeichnet, dass** eine erste Funktion (406) der DCI als eine Signalisierung zum Konfigurieren eines Uplink-Tonreferenzsignals (SRS) zu benutzen ist und eine zweite Funktion (408) der DCI als eine Signalisierung zum Planen eines physikalischen Uplink-Kanals (PUSCH) zu benutzen ist.

12. Vorrichtung (1000, 1100, 1200) zum Empfangen von Downlink-Steuerinformationen (DCI), aufweisend:
Empfangsmittel (1002, 1102, 1202) zum Empfangen der DCI;
Mittel (1004, 1104, 1204) zum Ressource n indikationswert-(RIV-)-Beziehen;
Mittel (1006, 1108, 1208) zur DCI-Funktionsbestimmung auf Basis von Werten des RIV, wobei unterschiedliche Bereiche der Werte unterschiedlichen Funktionen der DCI entsprechen,
**dadurch gekennzeichnet, dass** eine erste Funktion (406) der DCI als eine Signalisierung zum Konfigurieren eines Uplink-Tonreferenzsignals (SRS) zu benutzen ist und eine zweite Funktion (408) der DCI als eine Signalisierung zum Planen eines physikalischen Uplink-Kanals (PUSCH) zu benutzen ist.

## Revendications

1. Procédé de transmission d'informations de commande de liaison descendante (DCI), consistant à :
définir (100, 200) différentes valeurs sur une valeur d'indication de ressources (RIV) dans les informations DCI devant être transmises, sur la base de la fonction des informations DCI, dans lequel différentes plages des valeurs correspondent à différentes fonctions des informations DCI ; et
transmettre (102, 202) les informations DCI ;
**caractérisé en ce qu'**une première fonction (406) des informations DCI doit être utilisée en qualité de signalisation en vue de configurer un signal de référence de sondage de liaison montante (SRS), et une seconde fonction (408) des informations DCI doit être utilisée en qualité de signalisation en vue de planifier un canal partagé de liaison montante physique (PUSCH).

2. Procédé de transmission d'informations DCI selon la revendication 1, consistant en outre à : définir (200) un bit distinct de la valeur RIV dans les informations DCI devant être transmises, en tant que bit d'indication, sur la base de la fonction des informations DCI, dans lequel le bit d'indication, conjointement avec la valeur RIV, indique la fonction des informations DCI.

3. Procédé de transmission d'informations DCI selon la revendication 2, dans lequel lorsque la valeur RIV se situe dans une première plage de valeurs et lorsque le bit d'indication est activé, cela indique que les informations DCI sont utilisées en qualité de signalisation en vue de configurer le signal SRS ; lorsque la valeur RIV se situe dans une seconde plage de valeurs et lorsque le bit d'indication est activé, cela indique que les informations DCI sont utilisées en qualité de signalisation en vue de planifier le canal PUSCH et que le signal SRS doit être activé ; et lorsque la valeur RIV se situe dans la seconde plage de valeurs et lorsque le bit d'indication n'est pas activé, cela indique que les informations DCI sont uniquement utilisées en qualité de signalisation en vue de planifier le canal PUSCH.

4. Procédé de transmission d'informations DCI selon la revendication 2, dans lequel lorsque la valeur RIV se situe dans une première plage de valeurs, cela indique que les informations DCI sont utilisées en qualité de signalisation en vue de configurer le signal SRS ; lorsque la valeur RIV se situe dans une seconde plage de valeurs et lorsque le bit d'indication est activé, cela indique que les informations DCI sont utilisées en qualité de signalisation en vue de planifier le canal PUSCH et que le signal SRS doit être activé ; et lorsque la valeur RIV se situe dans la seconde plage de valeurs et lorsque le bit d'indication n'est pas activé, cela indique que les informations DCI sont uniquement utilisées en qualité de signalisation en vue de planifier le canal PUSCH.

5. Procédé de transmission d'informations DCI selon la revendication 1, consistant en outre à :
déterminer (300) si les informations DCI doivent être transmises dans un espace de recherche commun (CSS) ou dans un espace de recherche spécifique à l'équipement UE (USS) ;
dans lequel, si les informations DCI doivent être transmises dans l'espace USS, un bit supplémentaire est ajouté dans les informations DCI, par rapport à l'espace CSS (304).

6. Procédé de transmission d'informations DCI selon la revendication 5, consistant en outre à : définir (304) une valeur sur le bit supplémentaire, sur la base de la fonction des informations DCI devant être transmises, dans lequel le bit supplémentaire, conjointement avec la valeur RIV, indique la fonction des informations DCI.

7. Procédé de transmission d'informations DCI selon la revendication 6, dans lequel, lorsque la valeur RIV se situe dans une première plage de valeurs et lorsque le bit supplémentaire est activé, cela indique que les informations DCI sont utilisées en qualité de signalisation en vue de configurer le signal SRS ; lorsque la valeur RIV se situe dans une seconde plage de valeurs et lorsque le bit supplémentaire est activé, cela indique que les informations DCI sont utilisées en qualité de signalisation en vue de planifier le canal PUSCH, et que le signal SRS doit être activé ; et lorsque la valeur RIV se situe dans la seconde plage de valeurs et lorsque le bit supplémentaire n'est pas activé, cela indique que les informations DCI sont uniquement utilisées en qualité de signalisation en vue de planifier le canal PUSCH.

8. Procédé de transmission d'informations DCI selon la revendication 6, dans lequel, lorsque la valeur RIV se situe dans une première plage de valeurs, cela indique que les informations DCI sont utilisées en qualité de signalisation en vue de configurer le signal SRS ; lorsque la valeur RIV se situe dans une seconde plage de valeurs et lorsque le bit supplémentaire est activé, cela indique que les informations DCI sont utilisées en qualité de signalisation en vue de planifier le canal PUSCH, et que le signal SRS doit être activé ; et lorsque la valeur RIV se situe dans la seconde plage de valeurs et lorsque le bit supplémentaire n'est pas activé, cela indique que les informations DCI sont uniquement utilisées en qualité de signalisation en vue de planifier le canal PUSCH.

9. Procédé de réception d'informations de commande de liaison descendante (DCI), consistant à :
recevoir (400, 500, 600) les informations DCI ;
acquérir (402, 502, 602) une valeur d'indication de ressources (RIV) dans les informations DCI ; et
déterminer (404, 404', 504, 604) la fonction des informations DCI, sur la base des valeurs de la valeur RIV, dans lequel différentes plages des valeurs correspondent à différentes fonctions des informations DCI ;
**caractérisé en ce qu'**une première fonction (406) des informations DCI doit être utilisée en qualité de signalisation en vue de configurer un signal de référence de sondage de liaison montante (SRS), et une seconde fonction (408) des informations DCI doit être utilisée en qualité de signalisation en vue de planifier un canal partagé de liaison montante physique (PUSCH).

10. Procédé de réception d'informations DCI selon la revendication 9, consistant en outre à : détecter un état d'activation d'un bit d'indication distinct de la valeur RIV dans les informations DCI, dans lequel la détermination de la fonction des informations DCI consiste à déterminer (504, 604) la fonction des informations DCI sur la base de la valeur RIV, conjointement avec l'état d'activation du bit d'indication.

11. Dispositif (700, 800, 900) destiné à transmettre des informations de commande de liaison descendante (DCI), comprenant :
un moyen de définition (702, 802, 904) de valeur d'indication de ressources (RIV) pour définir différentes valeurs sur la valeur RIV dans les informations DCI devant être transmises, sur la base de la fonction des informations DCI, dans lequel différentes plages des valeurs correspondent à différentes fonctions des informations DCI ; et
un moyen de transmission (704, 806, 908) pour transmettre les informations DCI ;
**caractérisé en ce qu'**une première fonction (406) des informations DCI doit être utilisée en qualité de signalisation en vue de configurer un signal de référence de sondage de liaison montante (SRS), et une seconde fonction (408) des informations DCI doit être utilisée en qualité de signalisation en vue de planifier un canal partagé de liaison montante physique (PUSCH).

12. Dispositif (1000, 1100, 1200) destiné à recevoir des informations de commande de liaison descendante (DCI), comprenant :
un moyen de réception (1002, 1102, 1202) pour recevoir les informations DCI;
un moyen d'acquisition (1004, 1104, 1204) de valeur d'indication de ressources (RIV) pour acquérir la valeur RIV dans les informations DCI ; et
un moyen de détermination de fonction d'informations DCI (1006, 1108, 1208) pour déterminer la fonction des informations DCI, sur la base des valeurs de la valeur RIV, dans lequel les différentes plages des valeurs correspondent à différentes fonctions des informations DCI ;
**caractérisé en ce qu'**une première fonction (406) des informations DCI doit être utilisée en qualité de signalisation en vue de configurer un signal de référence de sondage de liaison montante (SRS), et une seconde fonction (408) des informations DCI doit être utilisée en qualité de signalisation en vue de planifier un canal partagé de liaison montante physique (PUSCH).
